(19) Europäisches Patentamt / European Patent Office / Office européen des brevets

(11) **EP 2 100 778 A1**

(12) **EUROPEAN PATENT APPLICATION**
published in accordance with Art. 153(4) EPC

(43) Date of publication:
**16.09.2009 Bulletin 2009/38**

(51) Int Cl.:
*B60R 21/00* (2006.01)      *B60R 1/00* (2006.01)
*G06T 1/00* (2006.01)      *H04N 7/18* (2006.01)

(21) Application number: **07832088.4**

(22) Date of filing: **19.11.2007**

(86) International application number:
**PCT/JP2007/072358**

(87) International publication number:
**WO 2008/081655 (10.07.2008 Gazette 2008/28)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **28.12.2006 JP 2006355498
15.01.2007 JP 2007005984
27.04.2007 JP 2007119359
04.10.2007 JP 2007260800**

(71) Applicant: **Kabushiki Kaisha Toyota Jidoshokki
Kariya-shi,
Aichi 448-8671 (JP)**

(72) Inventors:
• **SHIMAZAKI, Kazunori
Kariya-shi
Aichi 448-8671 (JP)**
• **KIMURA, Tomio
Kariya-shi
Aichi 448-8671 (JP)**
• **TOMIOKA, Masami
Kariya-shi
Aichi 448-8671 (JP)**
• **NAKASHIMA, Yutaka
Kariya-shi
Aichi 448-8671 (JP)**
• **YANAGISAWA, Hideo
Kariya-shi
Aichi 448-8671 (JP)**

(74) Representative: **TBK-Patent
Bavariaring 4-6
80336 München (DE)**

(54) **PARKING ASSISTANCE DEVICE, COMPONENT FOR PARKING ASSISTANCE DEVICE, PARKING ASSISTANCE METHOD, PARKING ASSISTANCE PROGRAM, METHOD AND PROGRAM FOR CALCULATING VEHICLE TRAVEL PARAMETER, DEVICE FOR CALCULATING VEHICLE TRAVEL PARAMETER, AND COMPONENT FOR DEVICE FOR CALCULATING VEHICLE TRAVEL PARAMETER**

(57)    An image of a mark M is taken by a camera (1) with positioning a vehicle at a location in the vicinity of a parking space, an image processing unit (2) extracts a characteristic point from the image of the mark M and recognizes two-dimensional coordinates on the image, a positional parameter calculation unit (3) calculates positional parameters including six parameters of the camera (1) with reference to the mark M, and a relative position identification unit (4) identifies a relative positional relation between the vehicle and the parking space. A parking locus calculation unit (5) calculates a parking locus for leading the vehicle to the parking space based on the relative positional relation between the vehicle and the parking space identified by the relative position identification unit (4), and a guide apparatus (6) outputs drive operation guide information for causing the vehicle to travel along the calculated parking locus to a driver of the vehicle.

**(Cont. next page)**

# FIG. 2

**Description**

TECHNICAL FIELD

The present invention relates to a parking assistance apparatus and, in particular, a parking assistance apparatus that performs a parking assist by recognizing a relative positional relation between a vehicle and a target parking position with reliability.

In addition, the present invention also relates to a parking assistance apparatus part that realizes such a parking assistance apparatus through connection to a camera, a parking assist method for performing such a parking assist, and a parking assist program for causing a computer to execute the method.

Still in addition, the present invention also relates to a method of calculating a vehicle travel parameter such as a turn radius with respect to a steering angle, a vehicle travel parameter calculation program for causing a computer to execute this method, a vehicle travel parameter calculation apparatus, and a vehicle travel parameter calculation apparatus part.

BACKGROUND ART

Conventionally, for instance, as disclosed in Patent Document 1, a parking assisting device has been developed which takes an image behind a vehicle with a CCD camera, recognizes a parking zone behind the vehicle from the obtained image, calculates a target parking path from a current stop position of the vehicle to the parting zone, and gives a certain steering angle corresponding to this target parking path to a driver. When the driver drives the vehicle backward while constantly maintaining a steering angle at the given value and temporarily stops the vehicle at a location at which the steering angle should be changed, a new target parking path from there to the parking zone is calculated and a certain steering angle corresponding to this new target parking path is given to the driver again. The driver can drive the vehicle into the parking zone that is a target by driving the vehicle backward while constantly maintaining the steering angle at the newly given value.

When such a parking assist is performed, in order to move the vehicle along the target parking path, it is required to grasp a current state of the vehicle. For instance, in Patent Document 2, an apparatus is disclosed which takes an image in front of or behind a vehicle, extracts information about lightness in a predetermined area that is horizontal to a road surface, and detects a yaw rate of the vehicle based on a lightness gradient and a time-varying degree of this lightness information. When such an apparatus is used, it becomes possible to grasp a yaw rate of a vehicle from image information.

[Patent Document 1] JP 2002-172988 A
[Patent Document 2] JP 04-151562 A

DISCLOSURE OF THE INVENTION

PROBLEMS TO BE SOLVED BY THE INVENTION

In the device disclosed in Patent Document 1, however, it is tried to improve parking accuracy by newly calculating a target parking path when a vehicle is temporarily stopped at a changing point of a steering angle but it is difficult to accurately identify a relative positional relation between a parking zone and a current position of the vehicle merely by recognizing the parking zone behind the vehicle from an image taken by a CCD camera. This leads to a problem that although the target parking path is recalculated at the changing point of the steering angle, it is difficult to complete parking with high accuracy.

Also, in the apparatus disclosed in Patent Document 2, it is possible to detect a yaw rate of a vehicle but it is impossible to calculate a vehicle travel parameter such as a turn radius with respect to a steering angle, which results in a problem that an enormous amount of labor and time is required to obtain this vehicle travel parameter through actual measurement. In addition, there is also a problem that the vehicle travel parameter obtained through actual measurement includes an error due to various factors.

The present invention has been made in light of such conventional problems, and has an object to provide a parking assistance apparatus with which it becomes possible to park a vehicle at a target parking position with accuracy.

In addition, the present invention has an object to provide a parking assistance apparatus part that realizes such a parking assistance apparatus through connection to a camera, a parking assist method for performing such a parking assist, and a parking assist program for causing a computer to execute the method.

Further, the present invention has an object to provide a vehicle travel parameter calculation method with which it becomes possible to obtain a vehicle travel parameter with ease and accuracy, a vehicle travel parameter calculation program for causing a computer to execute such a calculation method, a vehicle travel parameter calculation apparatus, and a vehicle travel parameter calculation apparatus part.

MEANS FOR SOLVING THE PROBLEMS

A parking assistance apparatus according to the preset invention includes: a camera mounted on a vehicle for taking an image of a fixed target that is fixed to a predetermined place having a predetermined positional relation with respect to a target parking position and has at least one characteristic point; image processing means for extracting the characteristic point of the fixed target based on the image of the fixed target taken by the camera and recognizing two-dimensional coordinates of the characteristic point on the image of the fixed target; positional parameter calculation means for calculating positional parameters of the camera including at least two-dimensional coordinates and a pan angle with reference to the fixed target based on two or more sets of the two-dimensional coordinates recognized by the image processing means; relative position identification means for identifying a relative positional relation between the vehicle and the target parking position based on the positional parameters of the camera calculated by the positional parameter calculation means and the predetermined positional relation of the fixed target with respect to the target parking position; and parking locus calculation means for calculating a parking locus for leading the vehicle to the target parking position based on the relative positional relation between the vehicle and the target parking position identified by the relative position identification means.

A parking assistance apparatus part according to the present invention includes: an input portion connected to a camera mounted on a vehicle for taking an image of a fixed target that is fixed to a predetermined place having a predetermined positional relation with respect to a target parking position and has at least one characteristic point; image processing means for extracting the characteristic point of the fixed target based on the image of the fixed target taken by the camera and inputted through the input portion and recognizing two-dimensional coordinates of the characteristic point on the image of the fixed target; positional parameter calculation means for calculating positional parameters of the camera including at least two-dimensional coordinates and a pan angle with reference to the fixed target based on two or more sets of the two-dimensional coordinates recognized by the image processing means; relative position identification means for identifying a relative positional relation between the vehicle and the target parking position based on the positional parameters of the camera calculated by the positional parameter calculation means and the predetermined positional relation of the fixed target with respect to the target parking position; and parking locus calculation means for calculating a parking locus for leading the vehicle to the target parking position based on the relative positional relation between the vehicle and the target parking position identified by the relative position identification means.

A parking assist method according to the present invention includes the steps of: taking an image of a fixed target, which is fixed to a predetermined place having a predetermined positional relation with respect to a target parking position and has at least one characteristic point, with a camera mounted on a vehicle; extracting the characteristic point of the fixed target based on the taken image of the fixed target and recognizing two-dimensional coordinates of the characteristic point on the image of the fixed target; calculating positional parameters of the camera including at least two-dimensional coordinates and a pan angle with reference to the fixed target based on two or more sets of the recognized two-dimensional coordinates; identifying a relative positional relation between the vehicle and the target parking position based on the calculated positional parameters of the camera and the predetermined positional relation of the fixed target with respect to the target parking position; and calculating a parking locus for leading the vehicle to the target parking position based on the identified relative positional relation between the vehicle and the target parking position.

A parking assist program according to the present invention causes a computer to execute the steps of: taking an image of a fixed target, which is fixed to a predetermined place having a predetermined positional relation with respect to a target parking position and has at least one characteristic point, with a camera mounted on a vehicle; extracting the characteristic point of the fixed target based on the taken image of the fixed target and recognizing two-dimensional coordinates of the characteristic point on the image of the fixed target; calculating positional parameters of the camera including at least two-dimensional coordinates and a pan angle with reference to the fixed target based on two or more sets of the recognized two-dimensional coordinates; identifying a relative positional relation between the vehicle and the target parking position based on the calculated positional parameters of the camera and the predetermined positional relation of the fixed target with respect to the target parking position; and calculating a parking locus for leading the vehicle to the target parking position based on the identified relative positional relation between the vehicle and the target parking position.

A vehicle travel parameter calculation method according to the present invention includes the steps of: causing a vehicle to travel; capturing a detection signal from a sensor concerning vehicle travel; taking an image of a fixed target being outside the vehicle and having a characteristic point with a camera mounted on the vehicle at each of two locations midway through the travel; extracting the characteristic point of the fixed target for each taken image of the fixed target and recognizing two-dimensional coordinates of the characteristic point on the image of the fixed target; calculating each of positional parameters of the camera including two-dimensional coordinates and a pan angle with reference to the fixed target at the two locations based on the recognized two-dimensional coordinates; and calculating a travel parameter of the vehicle based on at least two sets of the calculated positional parameters and the captured detection signal.

A vehicle travel parameter calculation program according to the present invention causes a computer to execute the steps of: capturing a detection signal from a sensor concerning vehicle travel at a time of travel of a vehicle; taking an image of a fixed target being outside the vehicle and having a characteristic point with a camera mounted on the vehicle at each of at least two locations midway through the travel; extracting the characteristic point of the fixed target for each taken image of the fixed target and recognizing two-dimensional coordinates of the characteristic point on the image of the fixed target; calculating each of positional parameters of the camera including two-dimensional coordinates and a pan angle with reference to the fixed target at the at least two locations based on the recognized two-dimensional coordinates; and calculating a travel parameter of the vehicle based on at least two sets of the calculated positional parameters and the captured detection signal.

A vehicle travel parameter calculation apparatus according to the present invention includes: a sensor for obtaining a detection signal concerning vehicle travel; a camera mounted on a vehicle for taking an image of a fixed target being outside the vehicle and having a characteristic point; image processing means for extracting the characteristic point of the fixed target for each image of the fixed target taken by the camera at at least two locations midway through travel of the vehicle and recognizing two-dimensional coordinates of the characteristic point on the image of the fixed target; positional parameter calculation means for calculating each of positional parameters of the camera including two-dimensional coordinates and a pan angle with reference to the fixed target at the at least two locations based on the two-dimensional coordinates recognized by the image processing means; and vehicle travel parameter calculation means for calculating a travel parameter of the vehicle based on at least two sets of the positional parameters calculated by the positional parameter calculation means and the detection signal obtained by the sensor.

Further, a vehicle travel parameter calculation apparatus part according to the present invention includes: an input portion connected to a camera mounted on a vehicle for taking an image of a fixed target being outside the vehicle and having a characteristic point; image processing means for extracting the characteristic point of the fixed target for each image of the fixed target taken by the camera at at least two locations midway through travel of the vehicle and inputted through the input portion and recognizing two-dimensional coordinates of the characteristic point on the image of the fixed target; positional parameter calculation means for calculating each of positional parameters of the camera including two-dimensional coordinates and a pan angle with reference to the fixed target at the at least two locations based on the two-dimensional coordinates recognized by the image processing means; and vehicle travel parameter calculation means, which is connected to a sensor that obtains a detection signal concerning vehicle travel, for calculating a travel parameter of the vehicle based on at least two sets of the positional parameters calculated by the positional parameter calculation means and the detection signal obtained by the sensor.

EFFECTS OF THE INVENTION

According to the present invention, it becomes possible to park a vehicle at a target parking position with accuracy by identifying a relative positional relation between the vehicle and the target parking position.
Also, according to the present invention, it becomes possible to obtain a vehicle travel parameter with ease and accuracy.

BRIEF DESCRIPTION OF THE DRAWINGS

FIG. 1 is a block diagram showing a construction of a parking assistance apparatus according to a first embodiment of the present invention;
FIG. 2 is a plan view showing a relation between a vehicle and a mark at the time when an image of the mark is taken in the first embodiment;
FIG. 3 shows the mark used in the first embodiment;
FIG. 4 is a flowchart showing an operation of the first embodiment;
FIG. 5 is a plan view showing a parking locus calculated in the first embodiment;
FIG. 6 is a plan view showing a relation between a vehicle and a mark at the time when an image of the mark is taken in a second embodiment;
FIG. 7 is a plan view showing a relation between a vehicle and a mark at the time when an image of the mark is taken in a third embodiment;
FIG. 8 is a plan view showing a relation between a vehicle and a mark at the time when an image of the mark is taken in a modification of the third embodiment;
FIG. 9 is a plan view showing a relation between a vehicle and a mark at the time when an image of the mark is taken in a fourth embodiment;

FIG. 10 is a plan view showing a relation between a vehicle and a mark at the time when an image of the mark is taken again in a fifth embodiment;

FIG. 11 is a plan view showing a relation between the vehicle and the previously recognized mark at the time when an image of the mark is taken again in the fifth embodiment;

FIG. 12 is a plan view showing a relation between a vehicle and a mark at the time when an image of the mark is taken in a sixth embodiment;

FIG. 13A shows a mark used in a seventh embodiment;

FIG. 13B shows another mark used in the seventh embodiment;

FIG. 13C shows still another mark used in the seventh embodiment;

FIG. 14 is a plan view showing a relation between a vehicle and the mark used in the seventh embodiment at the time when an image of the mark is taken;

FIG. 15 shows a mark used in a modification of the seventh embodiment;

FIG. 16 is a plan view showing a relation between a vehicle and a mark at the time when an image of the mark is taken in an eighth embodiment;

FIG. 17 shows a parking space in which a mark used in a ninth embodiment is installed;

FIG. 18 shows a parking space in which a mark used in a modification of the ninth embodiment is installed;

FIG. 19 shows a parking space in which a mark used in another modification of the ninth embodiment is installed;

FIG. 20 is a block diagram showing a construction of an apparatus that displays a mark in a tenth embodiment;

FIG. 21 is a perspective view showing a state in which a mark is displayed using a projector;

FIG. 22 is a perspective view showing a state in which a mark is displayed using a laser scanner;

FIG. 23 is a plan view showing a state in which a mark is displayed using many light-emitting bodies;

FIG. 24 is a plan view showing a state in which a mark is displayed by using a light-emitting apparatus in a form of an electronic bulletin board;

FIG. 25 is a block diagram showing a construction of a parking assistance apparatus according to a twelfth embodiment;

FIG. 26 is a block diagram showing a construction of an apparatus for executing a vehicle travel parameter calculation method according to a thirteenth embodiment;

FIG. 27 is a flowchart showing the vehicle travel parameter calculation method according to the thirteenth embodiment;

FIG. 28 is a plan view showing a relation between a vehicle and a mark in the thirteenth embodiment;

FIG. 29 is a plan view showing a relation between a vehicle and a lattice figure in a fourteenth embodiment;

FIG. 30 is a block diagram showing a construction of a parking assistance apparatus according to a fifteenth embodiment;

FIG. 31 is a block diagram showing a construction of a parking assistance apparatus according to a sixteenth embodiment;

FIG. 32 is a flowchart showing an operation of the sixteenth embodiment;

FIG. 33 is a block diagram showing a construction of a parking assistance apparatus according to a seventeenth embodiment;

FIG. 34 is a block diagram showing a construction of a parking assistance apparatus according to an eighteenth embodiment;

FIG. 35 is a flowchart showing an operation of the eighteenth embodiment; and

FIG. 36 is a block diagram showing a construction of a parking assistance apparatus according to a nineteenth embodiment.

BEST MODE FOR CARRYING OUT THE INVENTION

Hereinafter, embodiments of the present invention will be described based on the accompanying drawings.

First Embodiment

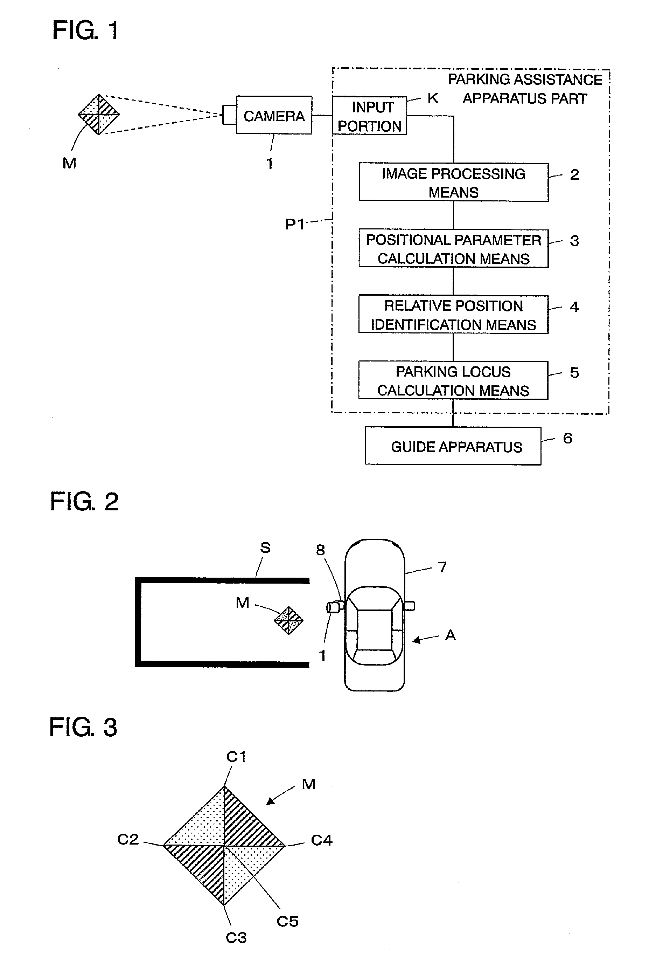

A construction of a parking assistance apparatus according to a first embodiment of the present invention is shown in FIG. 1. A camera 1 for taking an image of a mark M (fixed target) installed on a floor surface or the like of a parking space that is a target parking position is mounted on a vehicle and is connected to an input portion K of a parking assistance apparatus part P1. Image processing means 2 for extracting characteristic points of the mark M from the image of the mark M taken by the camera 1 and recognizing two-dimensional coordinates of the characteristic points on the image is connected to the input portion K. Positional parameter calculation means 3 for calculating a positional parameter of the camera 1 with reference to the mark M is connected to this image processing means 2 and relative position identification means 4 for identifying a relative positional relation between the vehicle and the parking space is connected to the positional parameter calculation means 3. Also, parking locus calculation means 5 for calculating a parking locus for leading the vehicle into the parking space is connected to the relative position identification means 4. The parking assistance apparatus part P1 is constructed by those input portion K, image processing means 2, positional parameter calculation means 3, relative position identification means 4, and parking locus calculation means 5. Further, a guide apparatus 6 for outputting drive operation guide information to a driver of the vehicle is connected to the parking locus calculation means 5.

As shown in FIG. 2, the camera 1 is embedded in a predetermined place having a predetermined positional relation with respect to the vehicle 7, such as a door mirror 8 of the vehicle 7, and is installed so that when the vehicle 7 is positioned at a location A in the vicinity of the parking space S that is a target parking position, the mark M installed on the floor surface of the parking space S is contained in a field of view. It is assumed that the predetermined positional relation of the camera 1 with respect to the vehicle 7 is grasped in advance.

Also, the mark M is fixed at a predetermined place having a predetermined positional relation with respect to the parking space S and it is assumed that the predetermined positional relation of the mark M with respect to the parking space S is grasped in advance. As this mark M, for instance, as shown in FIG. 3, it is possible to use a figure having an external form in a square shape in which four isosceles right-angled triangles are abutted against each other. Each isosceles right-angled triangle is given a color that is different from those of its adjacent isosceles right-angled triangles and this mark M has five characteristic points C1 to C5 formed by multiple side intersections.

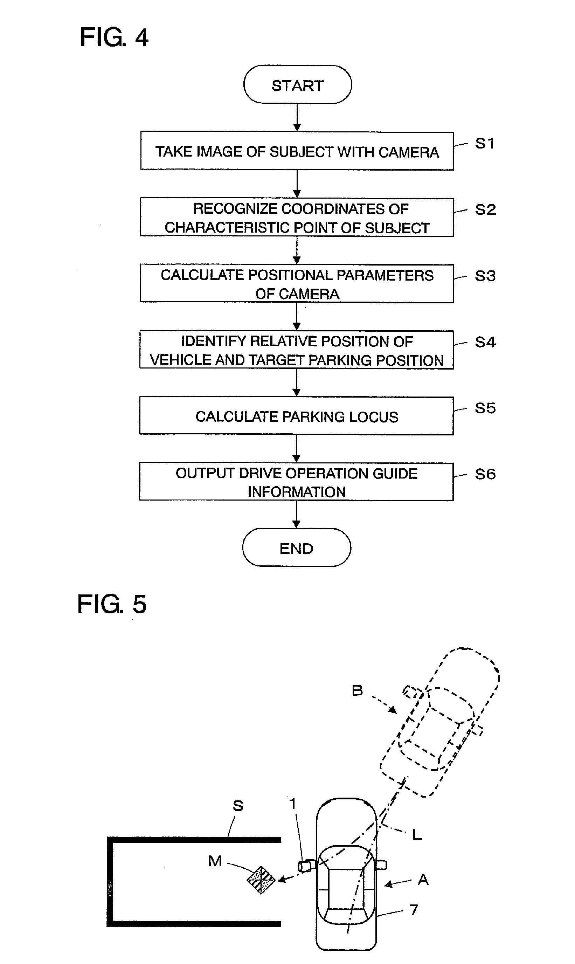

Next, an operation of the first embodiment will be described with reference to a flowchart of FIG. 4.

First, in Step S1, in a state in which, as shown in FIG. 2, the vehicle 7 is positioned at the location A in the vicinity of the parking space S, which is a target parking position, with the mark M entering into the field of view of the camera 1, an image of the mark M is taken by the camera 1.

The image taken by the camera 1 is inputted into the image processing means 2 through the input portion K and, in subsequent Step S2, the image processing means 2 extracts the five characteristic points C1 to C5 of the mark M from the image of the mark M taken by the camera 1 and recognizes and obtains each of two-dimensional coordinates of those characteristic points C1 to C5 on the image.

Next, in Step S3, based on the two-dimensional coordinates of each of the characteristic points C1 to C5 recognized by the image processing means 2, the positional parameter calculation means 3 calculates positional parameters including six parameters that are three-dimensional coordinates (x, y, z), a tilt angle (dip angle), a pan angle (direction angle) and a swing angle (rotation angle) of the camera 1 with reference to the mark M.

Here, a positional parameter calculation method by the positional parameter calculation means 3 will be described.

First, a point on the ground dropped from a center of a rear axle of the vehicle 7 vertically with respect to a road surface is set as an origin O, a road surface coordinate system is assumed in which an x axis and a y axis are set in a horizontal direction and a z axis is set in a vertical direction, and an image coordinate system is assumed in which an X axis and a Y axis are set on the image taken by the camera 1.

Coordinate values Xm and Ym (m=1 to 5) of the characteristic points C1 to C5 of the mark M in the image coordinate system are expressed by the following expressions from the six positional parameters of the characteristic points C1 to C5 of the mark M in the road surface coordinate system, in other words, coordinate values xm, ym and zm, and angle parameters Kn (n=1 to 3) that are the tilt angle (dip angle), the pan angle (direction angle) and the swing angle (rotation angle) described above using functions F and G.

$$\texttt{Xm=F(xm, ym, zm, Kn)+DXm}$$

$$\texttt{Ym=G(xm, ym, zm, Kn)+DYm}$$

Here, DXm and DYm are deviations between the X coordinates and the Y coordinates of the characteristic points C1 to C5 calculated using the functions F and G, and the coordinate values Xm and Ym of the characteristic points C1 to C5 recognized by the image processing means 2.

In other words, through expression of each of the X coordinates and the Y coordinates of the five characteristic points C1 to C5, ten relational expressions are created in total with respect to the six positional parameters (xm, ym, zm, Kn).

Therefore, the positional parameters (xm, ym, zm, Kn) are obtained which minimizes the following sum of squares of the deviations DXm and DYm.

$$S=S(DXm^2+DYm^2)$$

In other words, an optimization problem that minimizes S is solved. It is possible to use a known optimization method such as a simplex method, a steepest descent method, a Newton method, or a quasi-Newton method.

It should be noted here that by creating relational expressions whose number is greater than the number "six" of the positional parameters (xm, ym, zm, Kn) to be calculated, the positional parameters are determined, so it becomes possible to obtain the positional parameters (xm, ym, zm, Kn) with accuracy.

In the first embodiment of the present invention, ten relational expressions are created for the six positional parameters (xm, ym, zm, Kn) from the five characteristic points C1 to C5, but it is sufficient that the number of the relational expressions is equal to or greater than the number of the positional parameters (xm, ym, zm, Kn) to be calculated and when six relational expressions are created from at least three characteristic points, it is possible to calculate six positional parameters (xm, ym, zm, Kn).

In Step S4, using the positional parameters of the camera 1 thus calculated, the relative position identification means 4 identifies a relative positional relation between the vehicle 7 and the parking space S. In other words, the relative positional relation between the camera 1 and the parking space S is identified based on the positional parameters calculated by the positional parameter calculation means 3 and the predetermined positional relation of the mark M with respect to the parking space S grasped in advance and, further, the relative positional relation between the vehicle 7 and the parking space S is identified because the predetermined positional relation of the camera 1 with respect to the vehicle 7 is grasped in advance.

Next, in Step S5, the parking locus calculation means 5 calculates a parking locus for leading the vehicle 7 into the parking space S based on the relative positional relation between the vehicle 7 and the parking space S identified by the relative position identification means 4.

For instance, as shown in FIG. 5, a parking locus L is calculated along which after the vehicle 7 is first driven forward from the location A in the vicinity of the parking space S, at which the image of the mark M was taken by the camera 1, at a predetermined first steering angle and then is stopped at a location B, it is driven backward at a predetermined second steering angle and is parked in the parking space S. Here, it does not matter whether absolute values of the predetermined first steering angle and the predetermined second steering angle are equal to each other and are set to, for instance, a full steering angle (maximum steering angle) or are different from each other. In addition, a parking locus L is also possible along which the vehicle 7 is moved without holding the steering angle constant during one turning, that is, while changing the steering angle.

Finally, in Step S6, the guide apparatus 6 outputs drive operation guide information for traveling the vehicle 7 along the parking locus L calculated by the parking locus calculation means 5 to the driver of the vehicle 7. As a result, it becomes possible for the driver to travel the vehicle 7 along the parking locus L and park it in the parking space S merely by performing a drive operation in accordance with the guide information.

It should be noted here that it is possible to construct the image processing means 2, the positional parameter calculation means 3, the relative position identification means 4 and the parking locus calculation means 5 from a computer, and by setting a parking assist program of the operations in Steps S1 to S5 of FIG. 4 to the computer from a recording medium or the like in which the program is recorded, it becomes possible to cause the computer to execute each step.

Also, it is possible to collectively form the parking assistance apparatus part P1 constructed by the input portion K, the image processing means 2, the positional parameter calculation means 3, the relative position identification means 4 and the parking locus calculation means 5 in a form of a substrate module, a chip, or the like and a parking assistance apparatus is realized merely by connecting the camera 1 mounted on the vehicle to the input portion K of this parking assistance apparatus part P1. Further, when the guide apparatus 6 is connected to the parking locus calculation means 5 of the parking assistance apparatus part P1, it becomes possible to output the drive operation guide information described above to the driver of the vehicle 7.

It should be noted here that in the first embodiment described above, the positional parameters including the six parameters that are the three-dimensional coordinates (x, y, z), the tilt angle (dip angle), the pan angle (direction angle) and the swing angle (rotation angle) of the camera 1 with reference to the mark M are calculated, so even when there exists a step or an inclination between the floor surface of the parking space S, in which the mark M is arranged, and the road surface at a current position of the vehicle 7, it becomes possible to perform a highly accurate parking assist by correctly identifying the relative positional relation between the mark M and the vehicle 7.

However, when there exists no inclination between the floor surface of the parking space S, in which the mark M is arranged, and the road surface at the current position of the vehicle 7, it is possible to identify the relative positional relation between the mark M and the vehicle 7 by calculating positional parameters including at least four parameters that are the three-dimensional coordinates (x, y, z) and the pan angle (direction angle) of the camera 1 with reference to the mark M. In this case, when four relational expressions are created from two-dimensional coordinates of at least two characteristic points of the mark M, it is possible to obtain four positional parameters but it is preferable that the four positional parameters be accurately calculated using two-dimensional coordinates of more characteristic points with a least square method or the like.

In addition, when the mark M and the vehicle 7 exist on the same plane and there exists no step and inclination between the floor surface of the parking space S, in which the mark M is arranged, and the road surface at the current position of the vehicle 7, when positional parameters including at least three parameters that are two-dimensional coordinates (x, y) and the pan angle (direction angle) of the camera 1 with reference to the mark M are calculated, it is possible to identify the relative positional relation between the mark M and the vehicle 7. Also in this case, when four relational expressions are created from two-dimensional coordinates of at least two characteristic points of the mark M, it is possible to obtain three positional parameters but it is preferable that the three positional parameters be accurately calculated using two-dimensional coordinates of more characteristic points with a least square method or the like.

Second Embodiment

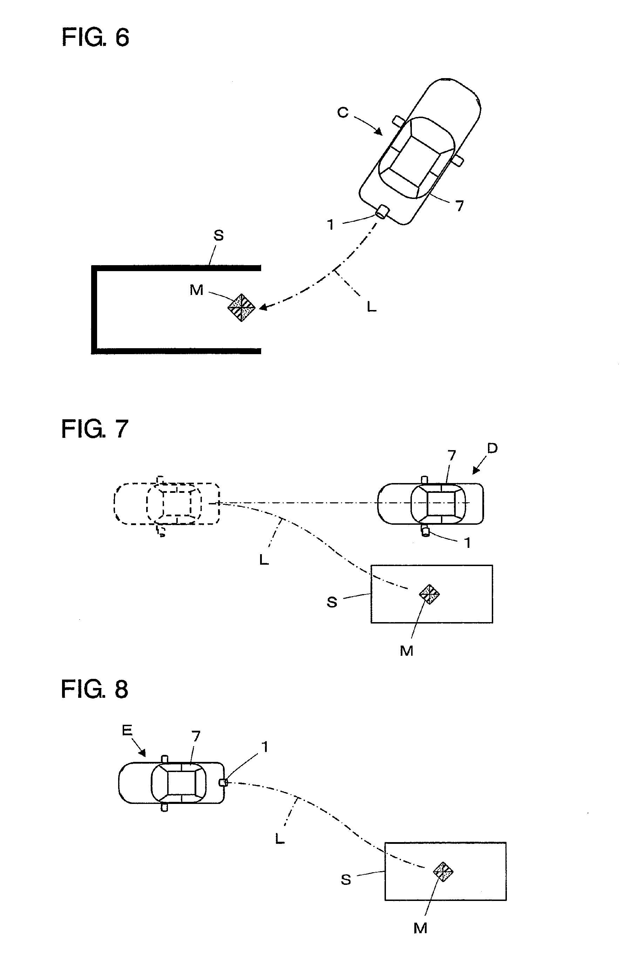

In the first embodiment, the camera 1 is embedded in the door mirror 8 positioned in a side portion of the vehicle 7, but as shown in FIG. 6, the camera 1 may be installed in a rear portion of the vehicle 7 and take an image behind the vehicle 7. In this case, the vehicle 7 is appropriately traveled and moved to a location C, at which the mark M in the parking space S enters into the field of view of the camera 1, and the parking locus L is calculated through Steps S1 to S5 shown in FIG. 4. Then, by performing a drive operation in accordance with the guide information outputted from the guide apparatus 6 in Step S6, it is possible to park the vehicle 7 in the parking space S.

Third Embodiment

In the first and second embodiments described above, a case where lateral parking into the parking space S is performed has been described as an example. In a like manner, it is also possible to, as shown in FIG. 7, perform parallel parking into the parking space S. The parallel parking into the parking space S is performed by calculating the parking locus L through the Steps S1 to S5 shown in FIG. 4 at a location D, at which the mark M in the parking space S enters into the field of view of the camera 1, and performing a drive operation in accordance with the guide information outputted from the guide apparatus 6 in Step S6.

In addition , it is also possible to perform the parallel parking by, as shown in FIG. 8, like in the second embodiment, using the camera 1 installed in the rear portion of the vehicle 7 and calculating the parking locus L at a location E at which the mark M in the parking space S enters into the field of view of the camera 1.

It should be noted that, it is required to instruct the parking locus calculation means 5 which one of the lateral parking and the parallel parking is to be performed. A construction is also possible in which a selection switch for selection of any one of a lateral mode and a parallel mode is provided near a driver's seat and the driver operates the selection switch. Alternatively, a construction is also possible in which a mark installed in the parking space for the lateral parking and a mark installed in the parking space for the parallel parking are set different from each other, the image processing means 2 distinguishes between the mark for the lateral parking and the mark for the parallel parking, and any one of the lateral parking and the parallel parking is automatically selected.

Fourth Embodiment

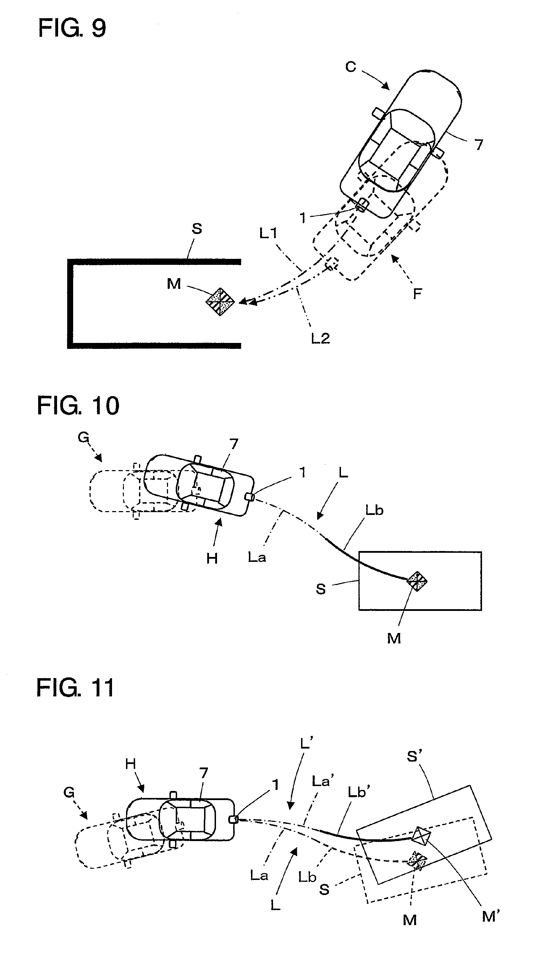

In the first to third embodiments described above, after an image of the mark M in the parking space S is taken by the camera 1 and the parking locus L is calculated, the vehicle 7 is led to the parking space S along the parking locus L, but a construction is also possible in which, as shown in FIG. 9, in a state in which a distance between the vehicle 7 and the parking space S is reduced through a movement of the vehicle 7 in accordance with the parking locus L temporarily calculated by the parking locus calculation means 5, a new parking locus L' is recalculated by executing Steps S1 to S5 shown in FIG. 4 again.

In other words, after the vehicle 7 is moved from the location C in accordance with the parking locus L first calculated by the parking locus calculation means 5, an image of the mark M in the parking space S is taken by the camera 1 again at a location F, new two-dimensional coordinates of the characteristic points C1 to C5 of the mark M are recognized by the image processing means 2, new positional parameters of the camera 1 are calculated by the positional parameter calculation means 3, a new relative positional relation between the vehicle 7 and the parking space S is identified by the relative position identification means 4, and a new parking locus L' is calculated by the parking locus calculation means 5. Then, drive operation guide information for traveling the vehicle 7 along this new parking locus L' is outputted from the guide apparatus 6 to the driver.

As the distance between the vehicle 7 and the parking space S is reduced, it becomes possible to recognize the mark M at a closer distance in a larger size, which improves a resolution with respect to the characteristic points C1 to C5 of the mark M and increases distances between the characteristic points C1 to C5. Therefore, it becomes possible to identify the relative positional relation between the mark M and the vehicle 7 with higher accuracy. As a result, by recalculating the new parking locus L' in a state in which the distance between the vehicle 7 and the parking space S is reduced, it becomes possible to perform parking with a higher degree of accuracy.

In addition, a construction is possible in which the parking locus is recalculated from moment to moment at predetermined time intervals or moving distance intervals. With this construction, it becomes possible to perform the parking into the parking space S that is a final target parking position with accuracy with almost no influence by an error in initial recognition of the characteristic points C1 to C5 of the mark M, states of the vehicle 7 such as a worn condition of a tire and an inclination of the vehicle 7, states of a road surface such as a step and a tilt, or the like.

In FIG. 9, a state of lateral parking is illustrated, but it is also possible to apply the fourth embodiment to parallel parking in a like manner.

Fifth Embodiment

In the fourth embodiment, the new parking locus is recalculated in the state in which the distance between the vehicle 7 and the parking space S is reduced but it is also possible to obtain the new parking locus using a previously calculated parking locus.

For instance, in a case where parallel parking is performed, when, as shown in FIG. 10, a parking locus L including locus portions La and Lb in a curve shape, whose steering directions are opposite to each other, is used, it becomes possible to obtain a new parking locus merely by, after the vehicle 7 is moved from a location G along the parking locus L temporarily calculated by the parking locus calculation means 5 and an image of the mark M in the parking space S is taken by the camera 1 again at a location H on the locus portion La that is a former half portion of the parking locus L, correcting the previously calculated locus portion Lb for the locus portion Lb in which the vehicle 7 is not yet traveled.

When, as shown in FIG. 11, the relative positional relation between the vehicle 7 and the parking space S is identified by taking an image of the mark M in the parking space S at the location H on the locus portion La, in a case where there is a displacement of a position of the parking space S with respect to the parking locus L calculated at the first location G, it is sufficient that a new locus portion Lb' is obtained merely by rotating the previously calculated locus portion Lb and/or moving it in parallel in accordance with a parking space S' newly identified at the location H, and the former locus portion La' is recalculated so that it continues from the location H to this new locus portion Lb'.

When a new parking locus L' including the locus portions La' and Lb' is obtained in this manner, it becomes possible to reduce a load of the recalculation.

It should be noted here that also in lateral parking, when the parking locus is formed by combining multiple locus portions in a curve shape and locus portions in a straight line shape with each other, it is possible to apply the fifth embodiment in a like manner.

Sixth Embodiment

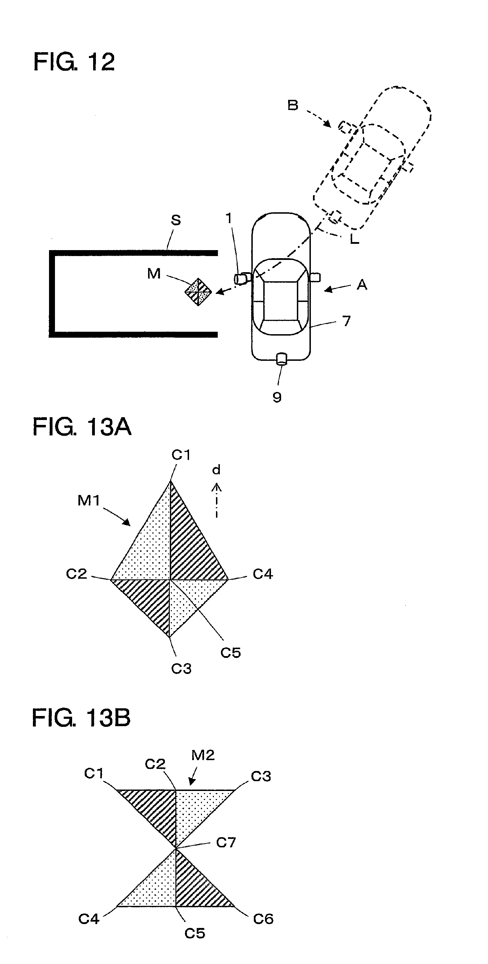

In the first to fifth embodiments described above, an image of the mark M in the parking space S is taken using the camera 1 installed in any one of the side portion and the rear portion of the vehicle 7, but it is also possible to, as shown in FIG. 12, install the camera 1 in the side portion of the vehicle 7, install a camera 9 in the rear portion of the vehicle 7, and take an image of the mark M in the parking space S with each of those cameras 1 and 9.

For instance, when an image of the mark M in the parking space S is taken by the camera 1 in the side portion of the vehicle 7 at the location A in the vicinity of the parking space S, it becomes possible to recognize the mark M at a closer distance in a larger size, which makes it possible to identify the relative positional relation between the mark M and the vehicle 7 with higher accuracy and calculate an accurate parking locus L. Then, after the mark M in the parking space S enters into the field of view of the camera 9 in the rear portion of the vehicle 7, it is possible to take an image of the mark M with the camera 9. For instance, when the vehicle 7 is moved to a turn location B of FIG. 12, the mark M in the parking space S goes outside the field of view of the camera 1 in the side portion of the vehicle 7 but enters into the field of view of the camera 9 in the rear portion of the vehicle 7. Therefore, when an image of the mark M is taken with the camera 9 at the time when the vehicle 7 is backward turned from the location B, it becomes possible to recalculate a new parking locus in a state that the distance between the vehicle 7 and the parking space S is reduced, like in the fourth and fifth embodiments.

As a result, it becomes possible to perform a further accurate parking assist.

Seventh Embodiment

In the first to sixth embodiments described above, a figure having an external form in a square shape, in which four isosceles right-angled triangles are abutted against each other, is used as the mark M in the parking space S, but the present invention is not limited thereto. For example, it is possible to use various marks as shown in FIGS. 13A to 13C. A mark M1 shown in FIG. 13A has a shape, in which two triangles of the mark M shown in FIG. 3 are extended in a predetermined direction d, and includes five characteristic points C1 to C5. In a case where the mark M1 is installed on the floor surface of the parking space S so that this direction d is directed toward an entrance of the parking space S, when an image of the mark M1 positioned obliquely below the camera 1 embedded in the door mirror of the vehicle 7 is taken with the camera 1 at a location in the vicinity of the parking space S, it becomes possible to obtain an image in a shape approximately close to a square by a perspective image. Therefore, it becomes easy to extract the five characteristic points C1 to C5 from the image of the mark M1.

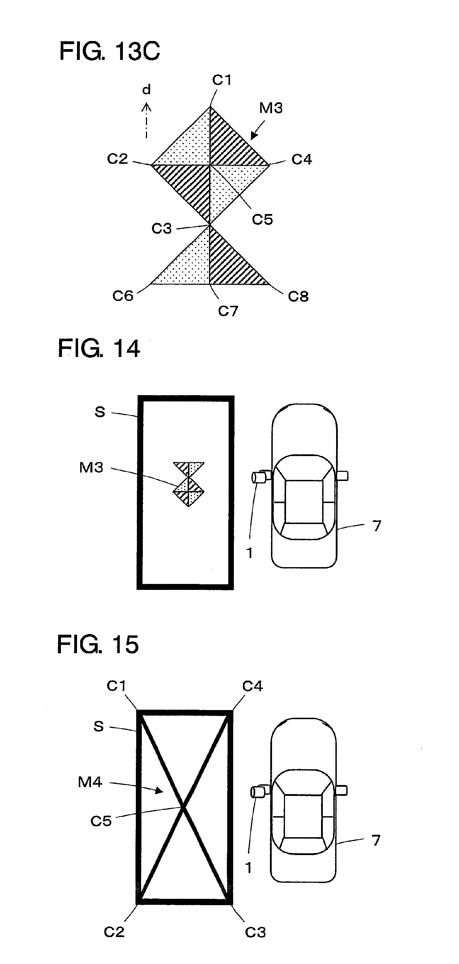

A mark M2 shown in FIG. 13B is obtained by interchanging positions of two triangles on an upper side and two triangles on a lower side of the mark M shown in FIG. 3 and includes seven characteristic points C1 to C7. A mark M3 shown in FIG. 13C is obtained by further adding two triangles to the mark M shown in FIG. 3 and includes eight characteristic points C1 to C8.

It is possible to use those marks M2 and M3 in the same manner as the mark M of FIG. 3, but when it is determined in advance that the mark M of FIG. 3 is given to a parking space for lateral parking and that the marks M2 and M3 are given to parking spaces for parallel parking, for instance, it becomes possible to automatically judge which one of the lateral parking and the parallel parking is to be performed through discrimination of the mark in the parking space by the image processingmeans 2 and cause the parking locus calculation means 5 to calculate a corresponding parking locus. For instance, when, as shown in FIG. 14, the mark M3 is discriminated using an image taken by the camera 1 of the vehicle 7 at a location in the vicinity of the parking space S, it is judged that the parallel parking is to be performed. Also, the mark M3 is asymmetric with respect to the direction d, so it becomes possible to indicate directivity in the direction d and it also becomes possible to limit a parking entering direction.

In addition, a mark M4 shown in FIG. 15 is also usable which is obtained by drawing diagonal lines in the rectangular parking space S and has characteristic points C1 to C5 at four corners of the parking space S and an intersection of the diagonal lines.

Eighth Embodiment

In the first to seventh embodiments described above, the mark in the parking space S has three or more characteristic points and by taking an image of the mark with the camera 1 or 9 at one location, six or more relational expressions are created and six positional parameters (xm, ym, zm, Kn) of the camera 1 or 9 are calculated, but it is also possible to use a mark that has only one or two characteristic points. Note that it is assumed that the vehicle 7 is provided with moving amount sensors for detecting a moving distance and a moving direction of the vehicle 7, such as a wheel speed sensor, a yaw rate sensor, and a GPS.

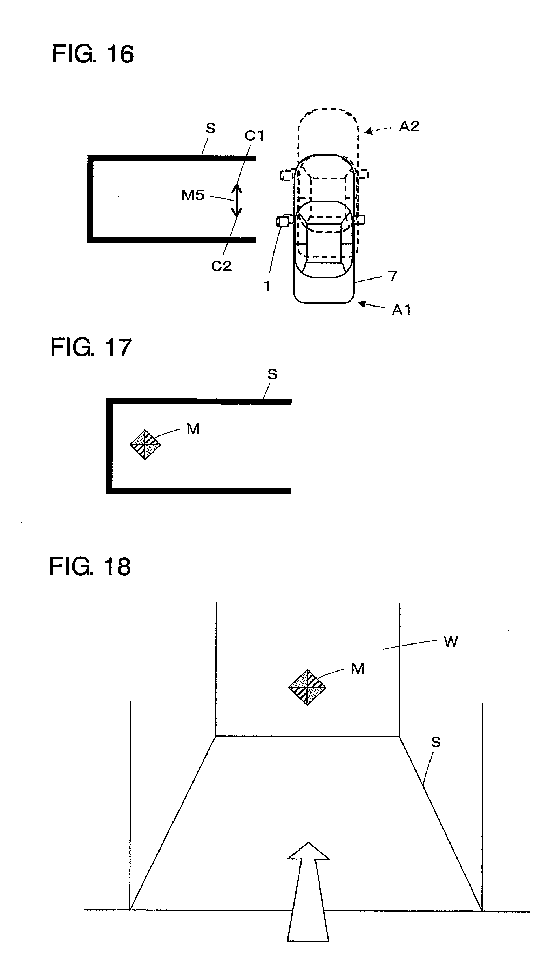

For instance, it is assumed that, as shown in FIG. 16, a mark M5 having only two characteristic points C1 and C2 is installed in the parking space S and an image of this mark M5 is taken with the camera 1 of the vehicle 7. First, by taking an image of the mark M5 at a location A1 in the vicinity of the parking space S, four relational expressions expressing X coordinates and Y coordinates in an image coordinate system of the two characteristic points C1 and C2 are obtained.

Next, the vehicle 7 is moved to a location A2. In this case, it is required that the location A2 is within a range in which the mark M5 is captured in the field of view of the camera 1. Further, a moving distance and a moving direction of the vehicle 7 from the location A1 to the location A2 are detected by the moving amount sensors provided to the vehicle 7. By taking an image of the mark M5 again with the camera 1 at the location A2, further four relational expressions expressing the X coordinates and Y coordinates in the image coordinate system of the two characteristic points C1 and C2 are obtained.

Based on eight relational expressions including the four relational expressions obtained at the location A1 and the four relational expressions obtained at the location A2 and the relative positions of the location A1 and the location A2 detected by the moving amount sensors, it is possible to calculate six positional parameters (xm, ym, zm, Kn) of the camera 1. As a result, it becomes possible to identify the relative positional relation between the vehicle 7 and the parking space S and calculate the parking locus.

In a like manner, when a mark having only one characteristic point is installed in the parking space S, by taking an image of the mark at each of at least three locations, it becomes possible to obtain six or more relational expressions and calculate six positional parameters (xm, ym, zm, Kn) of the camera 1.

In addition, it is also possible to mount multiple cameras, at least part of whose fields of view overlap each other, on the vehicle 7, and simultaneously take images of the mark with those multiple cameras. For instance, when an image of a mark having two characteristic points is taken with each of two cameras, information that is equal to that in the case where an image of a mark having four characteristic points is taken with one camera is obtained. Also, when an image of a mark having one characteristic point is taken with each of three cameras, information that is equal to that in the case where an image of a mark having three characteristic points is taken with one camera is obtained. Accordingly, it becomes possible to calculate six positional parameters (xm, ym, zm, Kn).

By reducing the number of characteristic points in this manner, it becomes possible to reduce a size of the mark.

Ninth Embodiment

In the first to eighth embodiments described above, when the mark is installed on an entrance side of the parking space S in the case of lateral parking, a distance between the vehicle 7 positioned in the vicinity of the parking space S and the mark is reduced, so it becomes easy to perceive the mark and recognize its characteristic points. Note that, it is not necessarily required to install the mark on the entrance side of the parking space S. It is also possible to, as shown in FIG. 17, install the mark M on a back side of the parking space S. In this case, when the camera is mounted in the rear portion of the vehicle 7, it becomes possible to perceive the mark M with the camera until immediately before a parking completion location, and by recalculating a new parking locus like in the fourth and fifth embodiments, it becomes possible to improve parking accuracy.

Also, as shown in FIG. 18, the mark M may be installed on a back wall surface W of the parking space S instead of the floor surface thereof. In such a manner, when the camera is mounted in the rear portion of the vehicle 7, it becomes possible to perceive the mark M with the camera until a parking completion location.

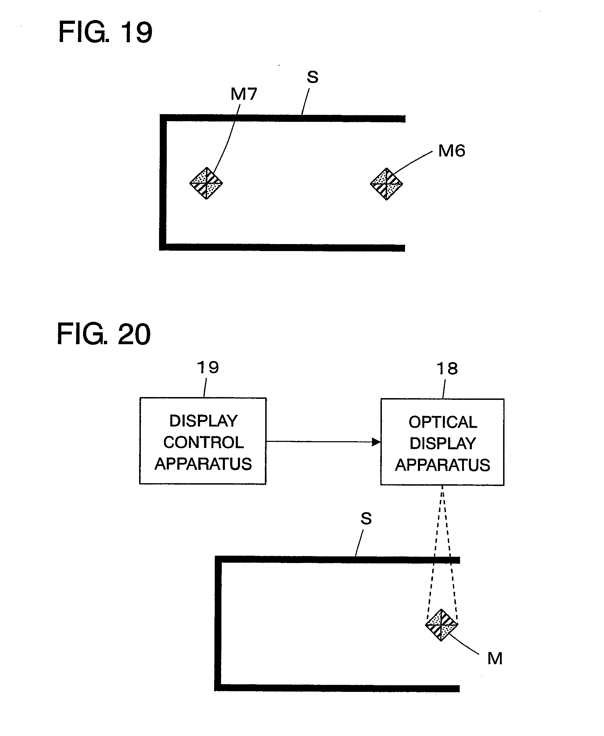

Further, as shown in FIG. 19, a mark M6 and a mark M7 may be installed on a floor surface in the vicinity of an entrance of the parking space S and a floor surface of a back portion thereof, respectively. In such a manner, even after part of the vehicle 7 enters into the parking space S and the mark M6 in the vicinity of the entrance of the parking space S goes outside the field of view of the camera, by taking an image of the mark M7 in the back portion of the parking space S with the camera, it becomes possible to calculate the relative positional relation between the vehicle 7 and the target parking position, which makes it possible to lead the vehicle 7 to a parking completion location with accuracy.

It should be noted here that it is preferable that the mark used in the present invention have a specific shape, color, and the like that are easy to discriminate with respect to a shape existing in the natural world, be a mark whose existence is easy to perceive through image recognition by the image processing means 2, and further, be a mark whose internally included characteristic points are easy to recognize.

Also, it is hoped that the mark has a sufficient size and is installed at a place, at which perception from the vehicle 7 is easy, so that target parking accuracy can be realized by accuracy of a relative positional relation between the vehicle 7 and the mark calculated based on the two-dimensional coordinates of the recognized characteristic points and accuracy of the parking locus calculated based on the relative positional relation.

More specifically, it is possible to install the mark by, for instance, directly painting it at a predetermined place such as a floor surface or a wall surface of the parking space S, sticking a sheet, on which the mark is drawn, at a predetermined place, or the like.

By displaying the mark in a form of a QR code or displaying the mark in a form of a two-dimensional barcode that is calibrated on a line parallel to or vertically to a side of the parking space S or on a diagonal line of the parking space S, it also becomes possible to store, in the mark, various information given below such as information concerning the parking space S itself and/or information concerning a method of parking into the parking space S, in addition to the characteristic points, and read the information through image recognition by the image processing means 2.

    (1) Characteristics of the parking space S itself (such as a size, an inclination, deformation and a tilt)

    (2) An address of the parking space S, a frame number in a large parking lot

    In a large parking lot, a frame number is designated at an entrance and there is a case where a moving path in the parking lot is also guided. By identifying the frame number stored in the mark, it becomes possible for the vehicle to recognize which frame is a designated frame. Also, through cooperation with a navigation system, confirmation of a private garage and confirmation of an address of a garage at a destination become possible.

    (3) A parking fee

    (4) A parking use limitation (such as an available time zone, eligibility, and the presence or absence of a use right due to exclusive use by disabled persons or the like)

    (5) A reachable range on the periphery of the parking lot, an entering limit range, the presence or absence and a position of an obstacle, and a condition at the time of parking (such as designation of forward parking)

Also, instead of the mark, a signboard may be set up at a predetermined place having a predetermined positional relation with respect to the parking space S, the various information described above may be displayed on this signboard, and the information may be read through image recognition by the image processing means 2.

Tenth Embodiment

In the first to ninth embodiments described above, it is also possible to display the mark used as a fixed target by light. For instance, as shown in FIG. 20, a display control apparatus 19 is connected to an optical display apparatus 18 for displaying the mark M using light and the mark M is displayed by the optical display apparatus 18 at a predetermined place based on a command from the display control apparatus 19.

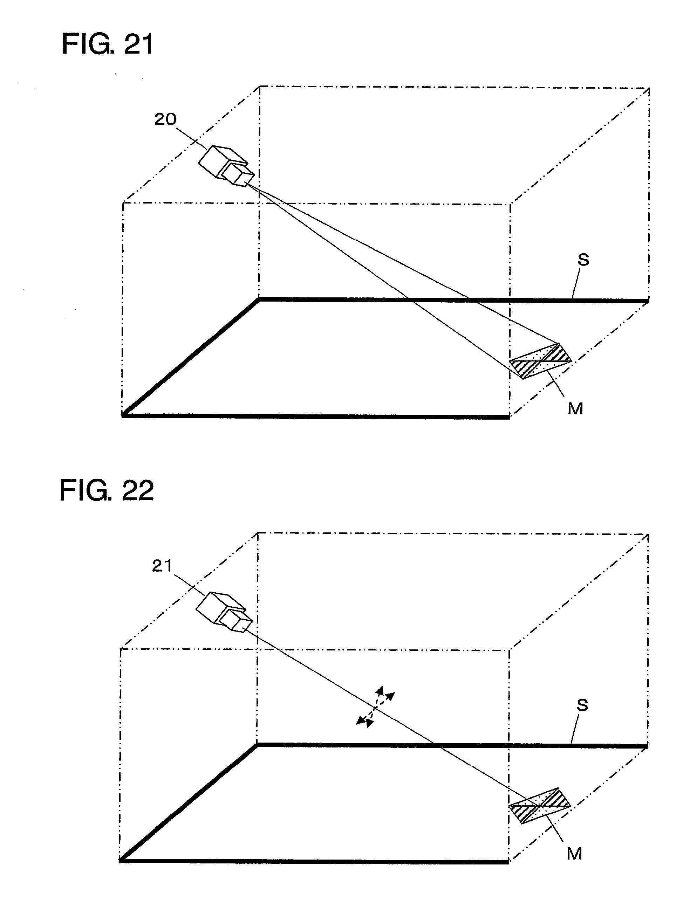

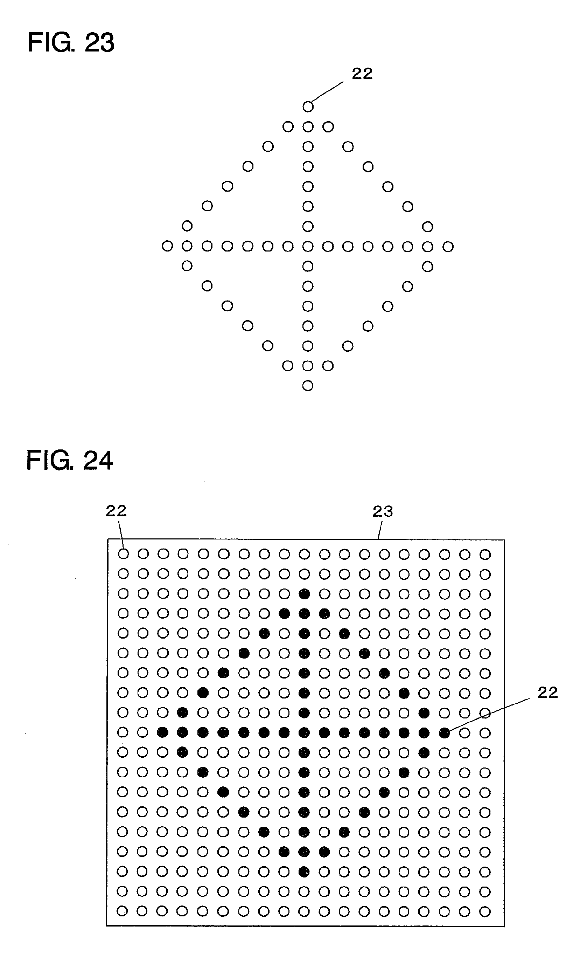

For instance, as shown in FIG. 21, it is possible to display the mark M through projection using a projector 20 as the optical display apparatus 18. Alternatively, as shown in FIG. 22, the mark M may be displayed by scanning laser beam using a laser scanner 21 as the optical display apparatus 18. In addition, as shown in FIG. 23, it is also possible to arrange and fix, in advance, many light-emitting bodies 22 such as LEDs at predetermined places along a shape of the mark M and display the mark M by causing the many light-emitting bodies 22 to emit light using the display control apparatus 19. Still in addition, as shown in FIG. 24, a light-emitting apparatus 23 in a form of a so-called electronic bulletin board, whose predetermined area is filled with many light-emitting bodies 22 such as LEDs, may be installed in advance and the mark M may be displayed by selectively causing the light-emitting bodies 22 in the light-emitting apparatus 23 to emit light using the display control apparatus 19. In FIG. 24, only the light-emitting bodies 22 colored in black emit light and other light-emitting bodies 22 are in a non-light emitting state.

When the mark M is displayed using light like in this tenth embodiment, a risk that a shape of the mark will be impaired due to a stain or rubbing of a mark installation surface is reduced as compared with a case where the mark is displayed through painting or using a sheet, which makes it possible to, even when the mark M is used for a long time, detect the relative positional relation between the vehicle 7 and the mark M with accuracy.
Also, by controlling the optical display apparatus 18 with the display control apparatus 19, it becomes possible to change display light intensity of the mark M with ease. Therefore, by adjusting the light intensity in accordance with brightness of a peripheral atmosphere such as in daytime or nighttime, it becomes possible to display the mark M that is easy to recognize at all times.

When the projector 20 or the laser scanner 21 is used as the optical display apparatus 18, by controlling the optical display apparatus 18 with the display control apparatus 19, it becomes possible to change a size of the mark M to be displayed with ease. Therefore, by displaying a large mark M when a distance of the vehicle 7 from the mark M is long and displaying a small mark M when the distance of the vehicle 7 from the mark M is reduced, recognition accuracy of the characteristic points of the mark M is improved. Note that in this case, it is required to transmit information concerning the size of the mark M to the vehicle 7 side.

In a like manner, when the projector 20 or the laser scanner 21 is used as the optical display apparatus 18, by controlling the optical display apparatus 18 with the display control apparatus 19, it becomes possible to change a position of the mark M to be displayed with ease. Therefore, when it is desired to adjust the target parking position in accordance with the presence of an obstacle in the parking space S or the like, it becomes possible to park the vehicle 7 at a desired position by changing the position of the mark M with ease.
In addition, instead of installing multiple marks on the floor surface in the vicinity of the entrance of the parking space S and the floor surface of the back portion or the like as shown in FIG. 19, the position of the mark M to be displayedmaybemoved in accordance with a position of the vehicle 7. It becomes possible to save time and money for installing multiple marks.
It should be noted here that also when the position of the mark M is changed in this manner, it is required to transmit information concerning the position of the mark M to the vehicle 7 side.

Even when the light-emitting apparatus 23 in a form of an electronic bulletin board shown in FIG. 24 is used as the optical display apparatus 18, it is possible to change the size or the position of the mark M described above in the area filled with the light-emitting bodies 22.
When the projector 20 or the laser scanner 21 is used, it becomes possible to change a display color of the mark M with ease. Therefore, by adjusting the display color in accordance with a change of a peripheral atmosphere, it also becomes possible to display the mark M that is easy to recognize at all times.
Also, when the projector 20 or the laser scanner 21 is used, the mark M may be displayed on a plane like a screen installed on a floor surface, a side wall, or the like of the parking space S. In this case, even when the floor surface, the side wall, or the like of the parking space S includes projections and depressions, it becomes possible to display the mark M with no impairment of a mark shape, which improves recognition accuracy of the characteristic points of the mark M. Note that it is possible to realize the plane like a screen by selecting a material and a shape in accordance with an installation place through sticking of a flexible screen onto an installation surface, installation of a flat plate member, or the like.

It is also possible to modulate brightness, wavelength (color), or the like of display light of the mark M by controlling the optical display apparatus 18 with the display control apparatus 19 and demodulate an image of the mark M taken by the camera of the vehicle 7. In this case, it becomes possible to recognize positions of the characteristic points of the mark M with accuracy by excluding an influence of noise due to sunlight, illumination light, or the like. Also, through modulation of the display light of the mark M, it becomes possible to superimpose the various information described in the ninth embodiment, such as the information concerning the parking space S itself and/or the information concerning the method of parking into the parking space S, as well as the characteristic points on the mark M. For instance, it also becomes possible to superimpose information indicating that the mark M is a passage point to the target parking position or information indicating that the mark M is a parking completion position, while changing a display position of the mark M in accordance with a position of the vehicle 7.

It should be noted here that it is sufficient that the display light of the mark M is recognizable by the camera of the vehicle 7 and it is also possible to use non-visible light such as infrared rays or ultraviolet rays. In addition, it is also possible to use high-speed modulated display light unrecognizable with an ordinary human eye and, still in addition, it is also possible to perform so-called imprinting of the mark M into an image recognizable with a human eye by displaying the mark M in a very short time which is impossible to recognize with the human eye. By recognizing the mark M imprinted in this manner with the camera of the vehicle 7, the relative positional relation between the vehicle 7 and the mark M is detected. In a like manner, it is also possible to imprint the various information described above in an image or the mark M.

Eleventh Embodiment

In the first to tenth embodiments described above, it is also possible to store a relative positional relation of a parking completion position with respect to the mark when the vehicle 7 is actually parked in accordance with the parking locus L calculated by the parking locus calculation means 5. And, the parking locus calculation means 5 may calculate a parking locus, which is corrected so that the vehicle 7 will be led to a target parking position, based on the stored relative positional relation between the previous parking completion position and the mark at the time of parking locus L calculation in the next parking operation.

In this case, when there occurs a positional deviation between a target parking position and an actual parking completion position, it becomes possible to compensate for the positional deviation. In addition, in the case of a private garage or the like, it also becomes possible to set not a center of a parking space but an eccentric place as a target parking position. It should be noted here that it is possible to recognize the relative positional relation between the parking completion position and the mark by, for instance, as shown in FIG. 18, taking an image of the mark installed on the back wall surface W of the parking space S with the camera in the rear portion of the vehicle 7. Also, a relative positional relation between not the parking completion position but a position immediately before parking completion, at which it is possible to take an image of the mark in the parking space S with the camera of the vehicle 7, and the mark may be stored and a corrected parking locus may be calculated based on this relative positional relation.

Further, a construction is also possible in which a navigation system is linked and when a specific parking space such as a private garage is perceived by the navigation system, a parking locus corrected based on a stored relative positional relation between a previous parking completion position and the mark is calculated. In this manner, it becomes possible to park the vehicle at a prescribed position in the case of an ordinary parking lot, and park the vehicle in a specially set condition such as at a position displaced from a center in the case of a specific parking space such as a private garage. Note that a GPS sensor may be provided instead of the navigation system to perceive a specific parking space based on information from the GPS sensor.

Twelfth Embodiment

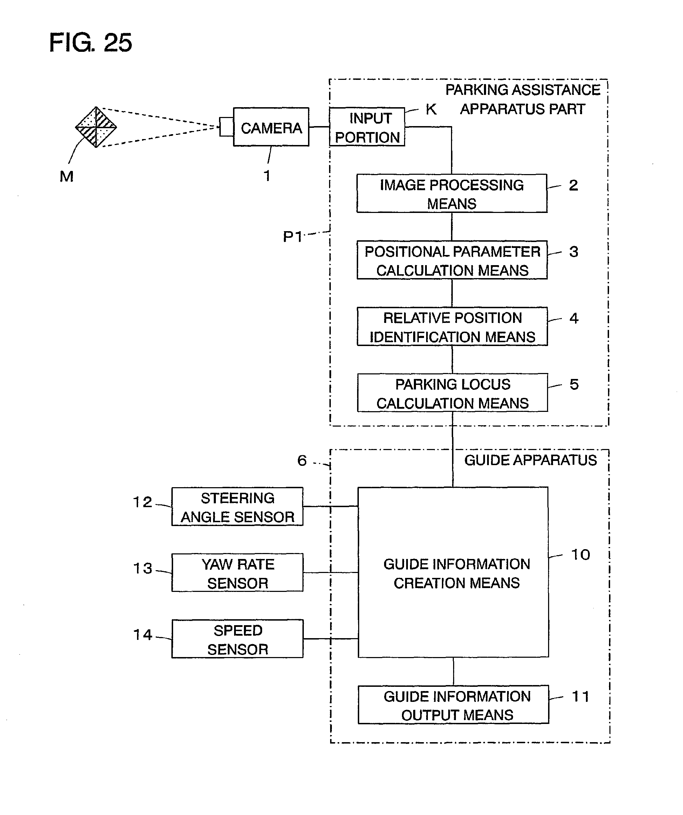

In the first to eleventh embodiments described above, it is possible to, as shown in FIG. 25, construct the guide apparatus 6 from guide information creation means 10 and guide information output means 11.

The guide information creation means 10 is means for creating drive operation guide information for traveling the vehicle 7 along the parking locus L based on detection signals from sensors concerning vehicle travel, such as a steering angle sensor 12, a yaw rate sensor 13, and a speed sensor 14, and the parking locus L calculated by the parking locus calculation means 5, and can be constructed from a computer.

The guide information output means 11 is means for outputting the guide information created by the guide information creation means 10 and can be constructed from, for instance, a speaker or a buzzer that transmits the guide information by stimulating the sense of hearing of the driver through emission of a voice, a warning sound, or the like. Aside from this, a display or a lamp that transmits the guide information by stimulating the sense of sight through image displaying, light emission, or the like may be used as the guide information output means 11. In addition, it is also possible to use a vibrator or the like, which transmits the guide information by stimulating the sense of touch through vibration or the like, as the guide information output means 11.

The guide information creation means 10 repeatedly captures a steering angle signal from the steering angle sensor 12, a yaw rate signal from the yaw rate sensor 13 and a speed pulse signal from the speed sensor 14 in accordance with travel of the vehicle 7 and calculates a turn radius, a turn angle and a moving distance of the vehicle 7 based on those signals. With this construction, a positional change amount from the relative positions of the vehicle 7 and the parking space S identified by the relative position identification means 4 in Step S4 of FIG. 4 is calculated and a current position and an advancing direction of the vehicle 7 are identified. The guide information creation means 10 creates the drive operation guide information for traveling the vehicle 7 along the parking locus L by comparing the position and the advancing direction of the vehicle 7 identified in this manner and the parking locus L calculated by the parking locus calculation means 5 in Step S5 of FIG. 4 with each other.

It should be noted here that vehicle travel parameters, such as a turn radius of the vehicle 7 with respect to a steering angle, a gain of the yaw rate sensor 13 and a moving distance per speed pulse, are set in the guide information creation means 10 in advance and the turn radius, the turn angle and the moving distance of the vehicle 7 are calculated using the steering angle signal, the yaw rate signal, the speed pulse signal and those vehicle travel parameters.

The drive operation guide information created in this manner is outputted from the guide information output means 11 to the driver of the vehicle 7.


Thirteenth Embodiment

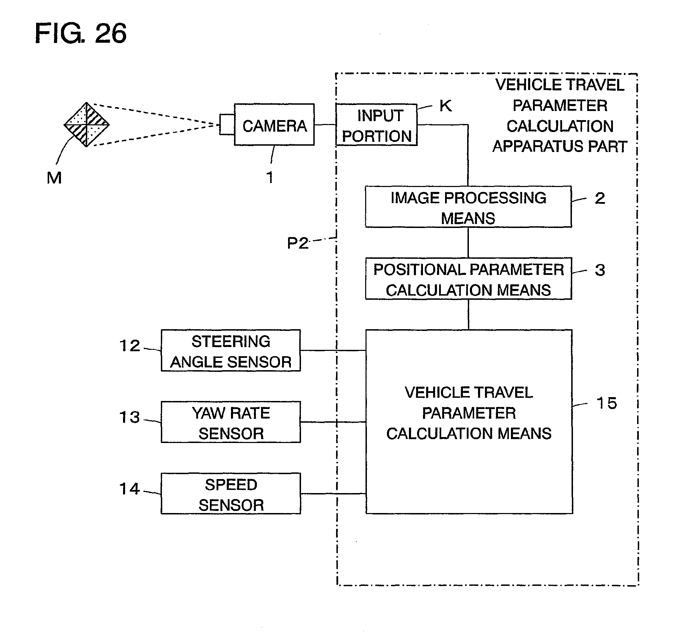

A construction of an apparatus for implementing a vehicle travel parameter calculation method according to a thirteenth embodiment of the present invention is shown in FIG. 26. A camera 1 for taking an image of a mark M (fixed target) of a predetermined shape installed on a road surface is mounted on a vehicle and is connected to an input portion K of a vehicle travel parameter calculation apparatus part P2. Image processing means 2 for extracting characteristic points of the mark M from the image of the mark M taken by the camera 1 and recognizing two-dimensional coordinates of the characteristic points on the image is connected to the input portion K. Positional parameter calculation means 3 for calculating a positional parameter of the camera 1 with reference to the mark M is connected to this image processing means 2, vehicle travel parameter calculation means 15 for calculating a travel parameter of the vehicle is connected to the positional parameter calculation means 3. The vehicle travel parameter calculation apparatus part P2 is constructed by those input portion K, image processing means 2, positional parameter calculation means 3 and vehicle travel parameter calculation means 15. A steering angle sensor 12, a yaw rate sensor 13 and a speed sensor 14 are each connected to the vehicle travel parameter calculation means 15.

It should be noted that it is assumed that in this thirteenth embodiment, a turn radius R with respect to a steering angle, a gain of the yaw rate sensor 13, and a moving distance per speed pulse are calculated as travel parameters of the vehicle.

The mark M installed on the road surface is the same as that used in the first embodiment and it is possible to, as shown in FIG. 3, use a figure having an external form in a square shape in which four isosceles right-angled triangles are abutted against each other. Each isosceles right-angled triangle has a color that is different from its adjacent isosceles right-angled triangles and this mark M has five characteristic points C1 to C5 formed by multiple side intersections.

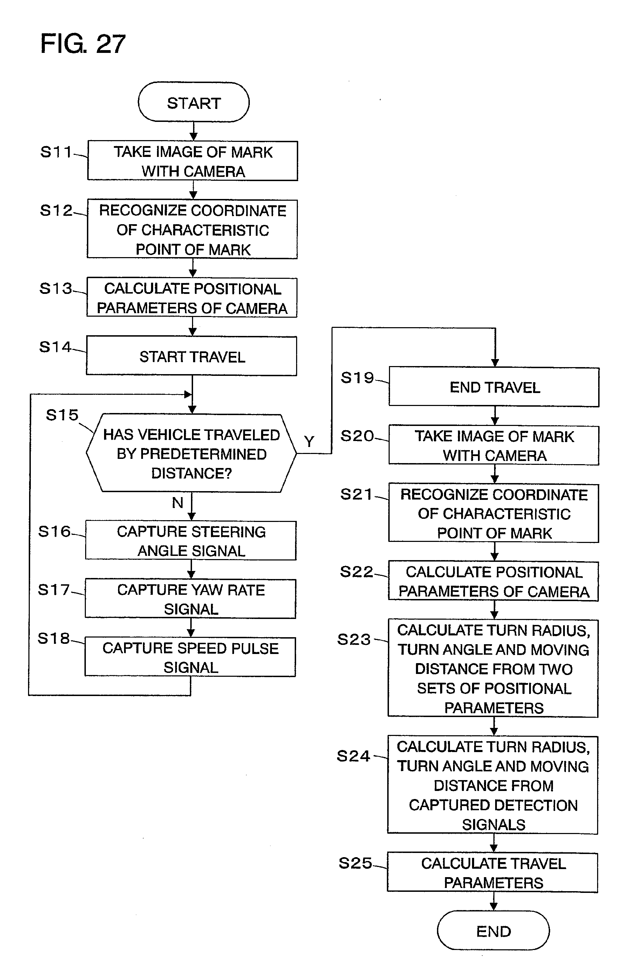

Next, the vehicle travel parameter calculation method according to the thirteenth embodiment will be described with reference to a flowchart of FIG. 27.

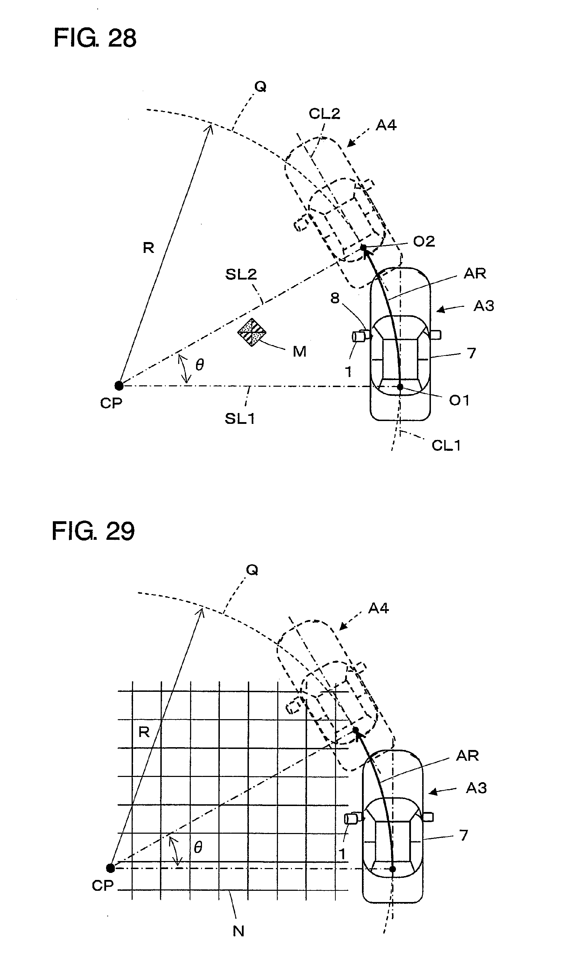

First, in Step S11, as shown in FIG. 28, the vehicle 7 is positioned at a location A3 in the vicinity of the mark M, thereby entering the mark M into a field of view of the camera 1. Note that the camera 1 is, for instance, embedded in a door mirror 8 of the vehicle 7 and it is assumed that a predetermined positional relation of the camera 1 with respect to the vehicle 7 is grasped in advance. In this state, an image of the mark M is taken by the camera 1.

The image taken by the camera 1 is inputted into the image processing means 2 through the input portion K and, in subsequent Step S12, the image processing means 2 extracts the five characteristic points C1 to C5 of the mark M from the image of the mark M taken by the camera 1 to recognize and obtain each of two-dimensional coordinates of those characteristic points C1 to C5 on the image.

Next, in Step S13, based on the two-dimensional coordinates of each of the characteristic points C1 to C5 recognized by the image processing means 2, the positional parameter calculation means 3 calculates positional parameters including four parameters that are three-dimensional coordinates $(x, y, z)$ and a pan angle (direction angle) K of the camera 1 with reference to the mark M.

Here, a positional parameter calculation method by the positional parameter calculation means 3 will be described.

First, a point on the ground dropped from a rear axle center O1 of the vehicle 7 vertically with respect to the road surface is set as an origin, a road surface coordinate system in which an x axis and a y axis are set in a horizontal direction and a z axis is set in a vertical direction is assumed, and also, an image coordinate system in which an X axis and a Y axis are set on the image taken by the camera 1 is assumed.

Coordinate values $X_m$ and $Y_m$ (m=1 to 5) of the characteristic points C1 to C5 of the mark M in the image coordinate system are expressed by the following expressions from the four positional parameters $x_m$, $y_m$, $z_m$, and K described above using functions F and G.

$$Xm = F(xm, \ ym, \ zm, \ K) + DXm$$

$$Ym = G(xm, \ ym, \ zm, \ K) + DYm$$

Here, DXm and DYm are deviations between the X coordinates and the Y coordinates of the characteristic points C1 to C5 calculated using the functions F and G, and the coordinate values Xm and Ym of the characteristic points C1 to C5 recognized by the image processing means 2.

In other words, through expression of each of the X coordinates and the Y coordinates of the five characteristic points C1 to C5, ten relational expressions are created in total with respect to the four positional parameters (xm, ym, zm, K).

Therefore, the positional parameters (xm, ym, zm, K) which minimize the following sum of squares of the deviations DXm and DYm are obtained.

$$S = \sum (DXm^2 + DYm^2)$$

In other words, an optimization problem that minimizes S is solved. It is possible to use a known optimization method such as a simplex method, a steepest descent method, a Newton method, or a quasi-Newton method.

It should be noted here that the positional parameters are determined by creating relational expressions whose number is greater than the number "four" of the positional parameters (xm, ym, zm, K) to be calculated, so it becomes possible to obtain the positional parameters (xm, ym, zm, K) with accuracy.

In this thirteenth embodiment, ten relational expressions are created for the four positional parameters (xm, ym, zm, K) from the five characteristic points C1 to C5, but it is sufficient that the number of the relational expressions is equal to or greater than the number of the positional parameters (xm, ym, zm, K) to be calculated and when four relational expressions are created from at least two characteristic points, it is possible to calculate the four positional parameters (xm, ym, zm, K).

Also, the parameter zm concerning an attachment height of the camera 1 may be set to a known constant and the remaining three positional parameters that are xm, ym and the pan angle (direction angle) K may be calculated.

Next, in Step S14, travel of the vehicle 7 is started by setting a steering angle of a steering wheel constant and, in Step S15, it is judged whether the vehicle 7 has traveled a predetermined distance from the location A3. When doing so, as to the "predetermined distance", it is required that a location A4 the vehicle 7 has moved from the location A3 by the predetermined distance is a location at which the mark M enters into the field of view of the camera 1 of the vehicle 7. As to this "predetermined distance", measurement may be made using a speed pulse signal from the speed sensor 14 or the like, or the driver may travel the vehicle by an appropriate amount at a rough estimate or by intuition. Then, when the vehicle does not yet travel by the predetermined distance, after a steering angle signal from the steering angle sensor 12 is captured in Step S16, a yaw rate signal from the yaw rate sensor 13 is captured in Step S17, and a speed pulse signal from the speed sensor 14 is captured in Step S18, the processing returns to Step S15 and it is judged whether the vehicle has traveled by the predetermined distance. In this manner, during the travel of the vehicle 7 by the predetermined distance, the steering angle signal, the yaw rate signal and the speed pulse signal are repeatedly captured. When it is judged in Step S15 that the vehicle has traveled by the predetermined distance, the processing proceeds to Step S19 in which the travel of the vehicle 7 is ended and the vehicle 7 is stopped at the location A4. In this state, in Step S20, an image of the mark M is taken by the camera 1 again.

Then, in Step S21, the image processing means 2 extracts the five characteristic points C1 to C5 of the mark M from the image of the mark M taken by the camera 1 and also recognizes and obtains each of two-dimensional coordinates of those characteristic points C1 to C5 on the image. In subsequent Step S22, the positional parameter calculation means 3 calculates the positional parameters including the four parameters that are the three-dimensional coordinates (x, y, z) and the pan angle (direction angle) K of the camera 1 with reference to the mark M on the road surface based on the two-dimensional coordinates of each of the characteristic points C1 to C5 recognized by the image processing means 2.

After the positional parameters at two locations that are the location A3 and the location A4 are calculated in this manner, the processing proceeds to Step S23 in which the vehicle travel parameter calculation means 15 calculates a turn radius R, a turn angle θ and a moving distance AR of the vehicle 7 corresponding to the movement from the location A3 to the location A4 based on the positional parameters at the two locations calculated in Steps S13 and S22.

Here, a method of calculating the turn radius R, the turn angle θ and the moving distance AR will be described using FIG. 28.

The positional parameters calculated by the positional parameter calculation means 3 include the four parameters that are the three-dimensional coordinates (x, y, z) and the pan angle (direction angle) K of the camera 1 with reference to the mark M on the road surface, so it becomes possible to grasp positions and directions of the vehicle 7 at both of the locations A3 and A4. Therefore, at the location A3, a straight line SL1 which passes through the rear axle center 01 of the vehicle 7 and is vertical to a center line CL1 of the vehicle 7 is calculated. Similarly, at the location A4, a straight line SL2 which passes through the rear axle center 02 of the vehicle 7 and is vertical to a center line CL2 of the vehicle 7 is calculated. Then, when an intersection between those straight lines SL1 and SL2 is obtained, this becomes a turn center CP of the vehicle 7, and when an intersecting angle between the straight lines SL1 and SL2 is obtained, this becomes the turn angle θ of the vehicle 7. Also, when a distance from the turn center CP to the rear axle center O1 or 02 of the vehicle 7 at the location A3 or A4 is calculated, this becomes the turn radius R. A turn circular arc Q drawn by the movement of the vehicle 7 due to the coordinate of the turn center CP and the turn radius R is calculated and a circular arc length of this circular arc Q with respect to the turn angle θ becomes the moving distance AR of the vehicle 7.

In subsequent Step S24, the vehicle travel parameter calculation means 15 calculates the turn radius R, the turn angle θ and the moving distance AR of the vehicle 7 corresponding to the movement from the location A3 to the location A4 based on the steering angle signal, the yaw rate signal and the speed pulse signal captured in Steps S16 to 18. The turn radius R of the vehicle 7 with respect to the steering angle is set in advance in the vehicle 7 in a map form or using a relational expression, and the vehicle travel parameter calculation means 15 calculates the turn radius R of the vehicle 7 using the map or relational expression described above based on the steering angle signal from the steering angle sensor 12.

Also, through an integration process of the yaw rate signal from the yaw rate sensor 13 and a multiplication by a gain of the yaw rate sensor 13 set in advance, a yaw angle of the vehicle 7 is detected. Therefore, by obtaining a difference between the yaw angles at both of the locations A3 and A4, the turn angle θ of the vehicle 7 from the location A3 to the location A4 is calculated.

In addition, the moving distance AR of the vehicle 7 is calculated, by multiplying the number of pulses of the speed pulse signal obtained by the speed sensor 14 from the location A3 to the location A4 by a moving distance per speed pulse set in advance.

Finally, in Step S25, the vehicle travel parameter calculation means 15 calculates the travel parameters of the vehicle 7 by comparing the turn radius R, the turn angle θ and the moving distance AR calculated from the positional parameters of the camera 1 in Step S23 and the turn radius R, the turn angle θ and the moving distance AR calculated from the detection signals of the various sensors in Step S24 with each other.

In other words, the map or relational expression of the turn radius R with respect to the steering angle is calculated or the map or relational expression of the turn radius R with respect to the steering angle set in advance is corrected so that a value of the turn radius R obtained in Step S24 becomes a value of the turn radius R obtained in Step S23.

Also, the gain of the yaw rate sensor 13 is calculated or the gain of the yaw rate sensor 13 set in advance is corrected so that a value of the turn angle θ obtained in Step S24 becomes a value of the turn angle θ obtained in Step S23.

Further, the moving distance per speed pulse is calculated or the moving distance per speed pulse set in advance is corrected so that a value of the moving distance AR obtained in Step S24 becomes a value of the moving distance AR obtained in Step S23.

It should be noted here that it is possible to construct the image processing means 2, the positional parameter calculation means 3 and the vehicle travel parameter calculation means 15 from a computer, and by setting a vehicle travel parameter calculation program of the operations in Steps S11 to S25 of FIG. 27 to the computer from a recording medium or the like in which the program is recorded, it becomes possible to cause the computer to execute each step.

Also, it is possible to collectively form the vehicle travel parameter calculation apparatus part P2 constructed by the input portion K, the image processing means 2, the positional parameter calculation means 3 and the vehicle travel parameter calculation means 15 in a form of a substrate module, a chip, or the like. A vehicle travel parameter calculation apparatus is realized merely by connecting the camera 1 mounted on the vehicle to the input portion K of this vehicle travel parameter calculation apparatus part P2 and connecting the steering angle sensor 12, the yaw rate sensor 13 and the speed sensor 14 to the vehicle travel parameter calculation means 15.

In the thirteenth embodiment described above, the turn radius R, the turn angle θ and the moving distance AR are calculated based on the positions and the directions of the vehicle 7 at the two locations A3 and A4, but when the position of the vehicle 7 at each of three locations is known, it is possible to identity a circular arc orbit of turn, so it is also possible to calculate those turn radius R, turn angle θ and moving distance AR from the position of the vehicle 7 at the three locations.

Also, in the thirteenth embodiment described above, the turn radius R with respect to a steering angle, the gain of the yaw rate sensor 13 and the moving distance per speed pulse are each calculated as the vehicle travel parameter, but a construction in which only any one or two of those are calculated is also possible.

An image of the mark M is taken by the camera 1 of the vehicle 7 in a stop state at each of the two locations A3 and A4, but it is sufficient that the vehicle 7 moves between the location A3 and the location A4, and an image of the mark M may be taken at each of two locations during the travel of the vehicle 7.

Also, the figure shown in FIG. 3 having the five characteristic points C1 to C5 is used as the mark M installed on the road surface, but the present invention is not limited thereto, and when a figure having at least two characteristic points is used as the fixed target outside the vehicle, it becomes possible to create four relational expressions and calculate the four positional parameters that are the three-dimensional coordinates (x, y, z) and the pan angle (direction angle) K by taking an image with the camera 1 and expressing each of an X coordinate and a Y coordinate in an image coordinate system of each characteristic point.

Further, when a mark M having three or more characteristic points is used, it is possible to create six or more relational expressions by expressing each of an X coordinate and a Y coordinate in an image coordinate system of each characteristic point, so it becomes possible to calculate positional parameters of the camera 1 including six parameters that are the three-dimensional coordinates (x, y, z), a tilt angle (dip angle), the pan angle (direction angle) and a swing angle (rotation angle). As a result, it becomes possible to calculate the turn radius R, the turn angle θ and the moving distance AR of the vehicle 7 with accuracy even when there is a difference of altitude of the road surface or the like, thereby improving calculation accuracy of the travel parameters of the vehicle 7.

In the thirteenth embodiment described above, such a construction with only one camera 1 has been described. However, it is also possible to mount two cameras, at least a part of whose fields of view overlap each other, on the vehicle 7 and simultaneously take images of the mark M in the overlapping fields of view with both of the cameras. In this case, it is possible to create four relational expressions from one characteristic point, so it becomes possible to calculate positional parameters of the camera 1 including four parameters that are the three-dimensional coordinates (x, y, z) and the pan angle (direction angle) when the mark M has one characteristic point, and it becomes possible to calculate positional parameters of the camera 1 including six parameters that are the three-dimensional coordinates (x, y, z), the tilt angle (dip angle), the pan angle (direction angle) and the swing angle (rotation angle) when there are two characteristic points. In addition, a construction with three or more cameras is also possible.

It is possible to calculate the travel parameters of the vehicle 7 by taking an image of the mark M at each of more locations including the two locations A3 and A4, and also repeatedly capturing the detection signals from the various sensors between the locations. In this case, it is sufficient that, at the many locations, the travel parameters such as the turn radius R with respect to a steering angle, the gain of the yaw rate sensor 13 and the moving distance per speed pulse are calculated or corrected so that the values of the turn radius R, the turn angle θ and the moving distance AR obtained from the detection signals of the various sensors become the most rational values with respect to the values of the turn radius R, the turn angle θ and the moving distance AR calculated from the positional parameters of the camera 1.

In addition, it is also possible to calculate the travel parameters of the vehicle 7 by continuously taking images of the mark M and also capturing the detection signals from the various sensors during the travel of the vehicle 7. In this case, the travel parameters may be calculated or corrected based on a vehicle behavior corresponding to the changing steering angle by moving the vehicle while changing the steering angle.

Fourteenth Embodiment

In the thirteenth embodiment described above, the mark M is arranged on the road surface and is set as the fixed target outside the vehicle, but it is also possible to, as shown in FIG. 29, arrange a lattice figure N on the road surface and use this lattice figure N as the fixed target outside the vehicle. In this case, it is possible to set each lattice intersection as a characteristic point. When each of two intersections is used as a characteristic point, it becomes possible to calculate positional parameters of the camera 1 including four parameters that are three-dimensional coordinates (x, y, z) and a pan angle (direction angle) K. When each of three or more intersections is used as a characteristic point, it becomes possible to calculate positional parameters of the camera 1 including six parameters that are the three-dimensional coordinates (x, y, z), a tilt angle (dip angle), the pan angle (direction angle) and a swing angle (rotation angle).

In the thirteenth and fourteenth embodiments described above, the camera 1 is embedded in the door mirror 8 positioned in a side portion of the vehicle 7, but the present invention is not limited to this. For instance, the camera 1 may be installed in a rear portion of the vehicle 7 to take an image behind the vehicle 7.

When the travel parameters are obtained by turning the vehicle 7, it is preferable that the travel parameters are calculated or corrected independently between left turn and right turn. In addition, there is also a case where the moving distances per speed pulse are different between at the time of turn and at the time of straight advance, so it is preferable that not only a value at the time of turn travel but also a value at the time when the vehicle 7 is traveled straight ahead is calculated.

Fifteenth Embodiment

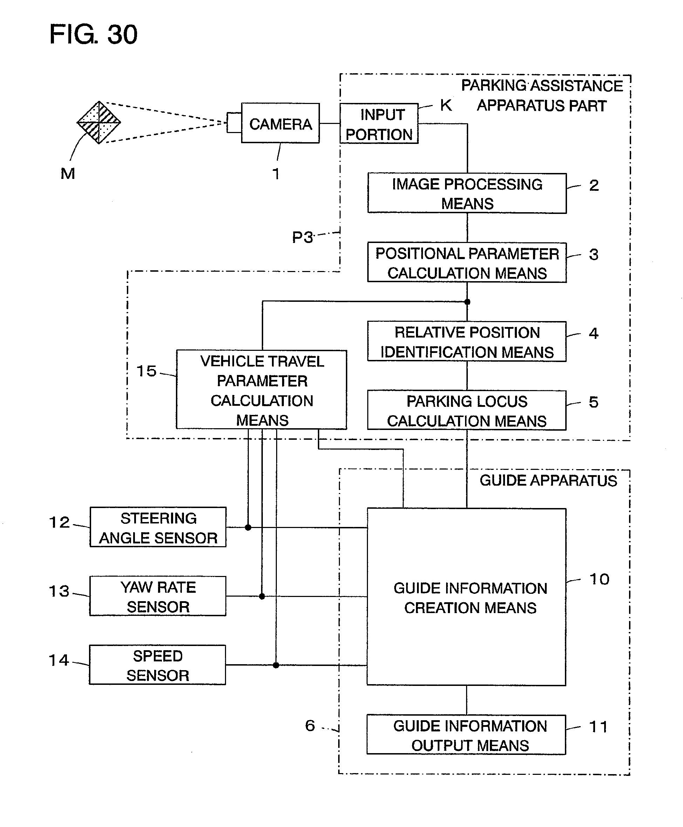

A construction of a parking assistance apparatus according to a fifteenth embodiment is shown in FIG. 30. In the fifteenth embodiment, in the apparatus in the twelfth embodiment shown in FIG. 25, the vehicle travel parameter calculation means 15 used in the thirteenth and fourteenth embodiments is connected between the positional parameter calculation means 3 and the sensors that are the steering angle sensor 12, the yaw rate sensor 13 and the speed sensor 14. In the thirteenth and fourteenth embodiments, the vehicle 7 is traveled in accordance with a special sequence for calculating the vehicle travel parameters and an image of the mark M or the lattice figure N is taken, but in this fifteenth embodiment, the vehicle travel parameters are calculated by the vehicle travel parameter calculation means 15 during parking of the vehicle 7 into the parking space based on the guide information provided from the guide apparatus 6.

First, a parking assist is performed in the same manner as in the operation in the first embodiment shown in FIG. 4. In other words, an image of the mark M installed on the floor surface or the like is taken by the camera 1 in a state in which the vehicle 7 is positioned in the vicinity of the parking space S, two-dimensional coordinates on the image of the five characteristic points C1 to C5 of the mark M are recognized by the image processing means 2, and the positional parameters of the camera 1 are calculated by the positional parameter calculation means 3. The calculated positional parameters are sent to the vehicle travel parameter calculation means 15 and are also sent to the relative position identification means 4, and the relative positional relation between the vehicle 7 and the parking space S is identified by the relative position identification means 4. In addition, the parking locus for leading the vehicle 7 to the parking space S is calculated by the parking locus calculation means 5 based on this relative positional relation, and the guide information is created by the guide information creation means 10 of the guide apparatus 6 and is outputted from the guide information output means 11 to the driver.

When travel of the vehicle 7 is started in accordance with the guide information, the vehicle travel parameter calculation means 15 repeatedly captures the steering angle signal from the steering angle sensor 12, the yaw rate signal from the yaw rate sensor 13 and the speed pulse signal from the speed sensor 14, and measures a moving distance of the vehicle 7 based on those signals, and an image of the mark M is taken again by the camera 1 at a location at which the vehicle has traveled by a predetermined distance. Then, two-dimensional coordinates on the image of the characteristic points C1 to C5 of the mark M are recognized by the image processing means 2, and the positional parameters of the camera 1 are calculated by the positional parameter calculation means 3 and are sent to the vehicle travel parameter calculation means 15.

After the positional parameters of the camera 1 at two locations are sent to the vehicle travel parameter calculation means 15 in this manner, the vehicle travel parameter calculation means 15 calculates the turn radius R, the turn angle $\theta$ and the moving distance AR of the vehicle 7 corresponding to a movement between the two locations based on those positional parameters.

Next, the vehicle travel parameter calculation means 15 calculates the turn radius R, the turn angle $\theta$ and the moving distance AR of the vehicle 7 corresponding to the movement between the two locations based on the repeatedly captured steering angle signal from the steering angle sensor 12, yaw rate signal from the yaw rate sensor 13 and speed pulse signal from the speed sensor 14.

In addition, the travel parameters of the vehicle 7, such as the turn radius R with respect to a steering angle, the gain of the yaw rate sensor 13 and the moving distance per speed pulse, are calculated through comparison between the turn radius R, the turn angle $\theta$ and the moving distance AR calculated from the positional parameters of the camera 1 and the turn radius R, the turn angle $\theta$ and the moving distance AR calculated from the detection signals of the various sensors.

The calculated travel parameters are sent from the vehicle travel parameter calculation means 15 to the guide information creation means 10 of the guide apparatus 6 and are updated.

As described above, it is possible to carry out the calculation of the travel parameters of the vehicle 7 in a parking sequence based on the guide information and it is also possible for the guide information creation means 10 to create the guide information using the calculated travel parameters, so it becomes possible to perform a highly accurate parking guide even when parking into the parking space S is performed for the first time.

It is possible to construct the image processing means 2, the positional parameter calculation means 3, the relative position identification means 4, the parking locus calculation means 5 and the vehicle travel parameter calculation means 15 from a computer, and by setting a parking assist program of the operations described above to the computer from a recording medium or the like in which the program is recorded, it becomes possible to cause the computer to execute each step.

Also, a parking assistance apparatus part P3 is constructed by the input portion K, the image processing means 2, the positional parameter calculation means 3, the relative position identification means 4, the parking locus calculation means 5 and the vehicle travel parameter calculation means 15 and it is possible to collectively form this parking assistance apparatus part P3 in a form of a substrate module, a chip, or the like.

Sixteenth Embodiment

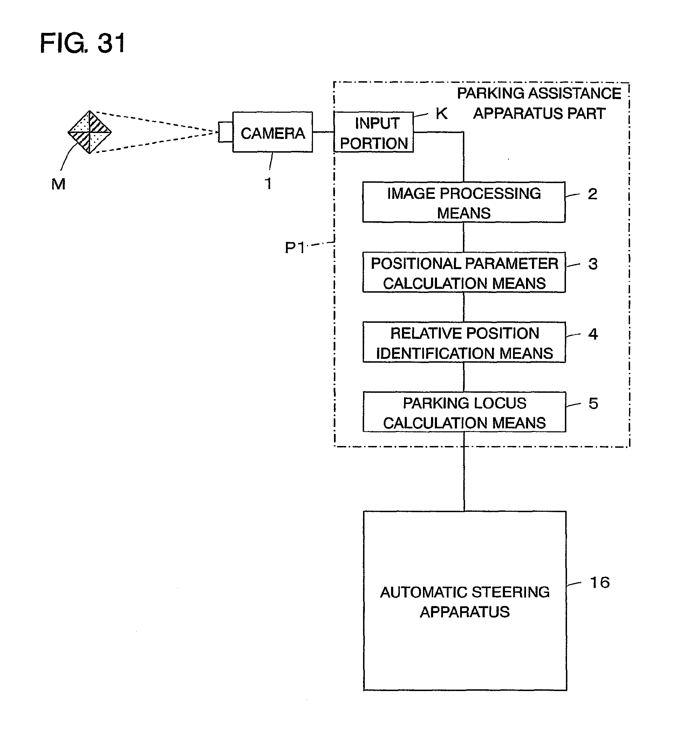

A construction of a parking assistance apparatus according to a sixteenth embodiment is shown in FIG. 31. In the sixteenth embodiment, in the apparatus in the first embodiment shown in FIG. 1, an automatic steering apparatus 16 is connected to the parking locus calculation means 5 instead of the guide apparatus 6. The automatic steering apparatus 16 is an apparatus that creates a steering signal so that a steering wheel is automatically steered in accordance with a movement of the vehicle 7 through a brake operation and an acceleration operation by the driver and sends out the steering signal to an electric power steering apparatus (EPS).

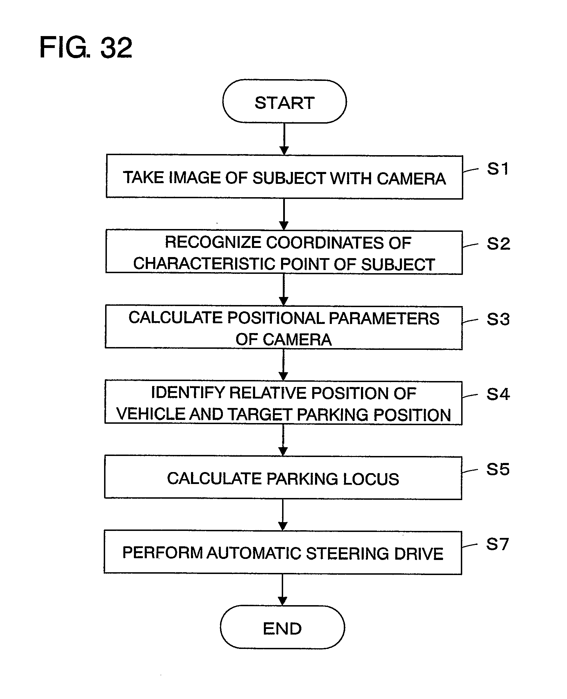

An operation of the sixteenth embodiment is shown in a flowchart in FIG. 32. After a parking locus L is calculated by the parking locus calculation means 5 in Step S5, steering for traveling the vehicle 7 along the parking locus L is automatically performed by the automatic steering apparatus 16 in subsequent Step S7. As a result, it becomes possible for the driver to perform parking into the parking space S merely by performing a brake operation and an acceleration operation while paying attention to an obstacle or the like on the periphery of the vehicle 7.

It should be noted here that also in the second to twelfth embodiments, it is possible to perform the automatic steering by similarly applying the sixteenth embodiment.

Seventeenth Embodiment

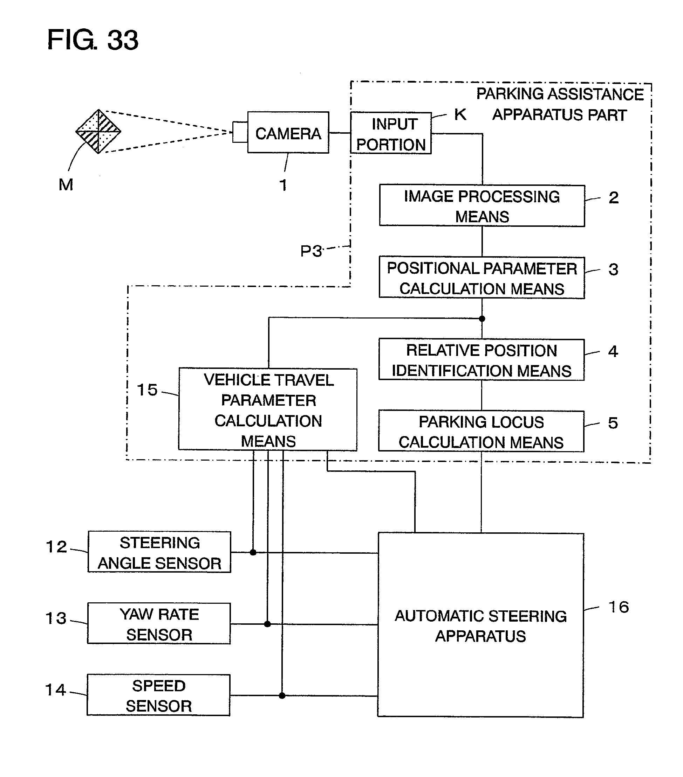

A construction of a parking assistance apparatus according to a seventeenth embodiment is shown in FIG. 33. In the seventeenth embodiment, in the apparatus in the fifteenth embodiment shown in FIG. 30, the automatic steering apparatus 16 is connected to the parking locus calculation means 5, the vehicle travel parameter calculation means 15, the steering angle sensor 12, the yaw rate sensor 13 and the speed sensor 14 instead of the guide apparatus 6.

The vehicle travel parameters such as the turn radius of the vehicle 7 with respect to a steering angle, the gain of the yaw rate sensor 13 and the moving distance per speed pulse are set in advance in the automatic steering apparatus 16. Based on the detection signals from the steering angle sensor 12, the yaw rate sensor 13 and the speed sensor 14 and the parking locus calculated by the parking locus calculation means 5, the automatic steering apparatus 16 creates a steering signal for automatically steering a steering wheel so that the vehicle 7 is capable of traveling along the parking locus.

Then, during a movement of the vehicle 7 into the parking space S through a brake operation and an acceleration operation in which steering is performed by the automatic steering apparatus 16, the vehicle travel parameters are calculated by the vehicle travel parameter calculation means 15, are sent from the vehicle travel parameter calculation means 15 to the automatic steering apparatus 16, and are updated. As a result, it becomes possible to perform highly accurate parking.

Eighteenth Embodiment

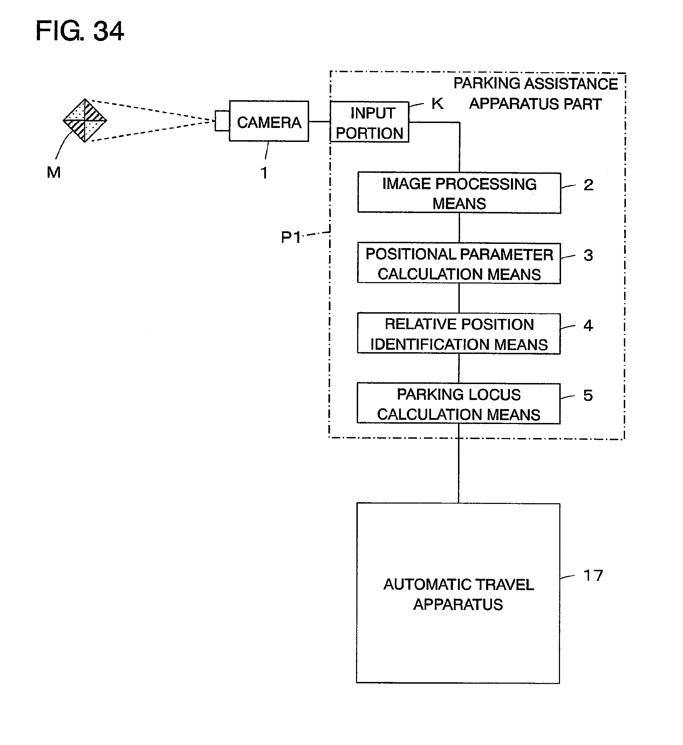

A construction of a parking assistance apparatus according to an eighteenth embodiment is shown in FIG. 34. In the eighteenth embodiment, in the apparatus in the first embodiment shown in FIG. 1, an automatic travel apparatus 17 is connected to the parking locus calculation means 5 instead of the guide apparatus 6. The automatic travel apparatus 17 is an apparatus that causes the vehicle 7 to automatically travel by outputting travel signals such as a brake control signal, an acceleration control signal and a shift control signal in addition to a steering signal for steering a steering wheel.

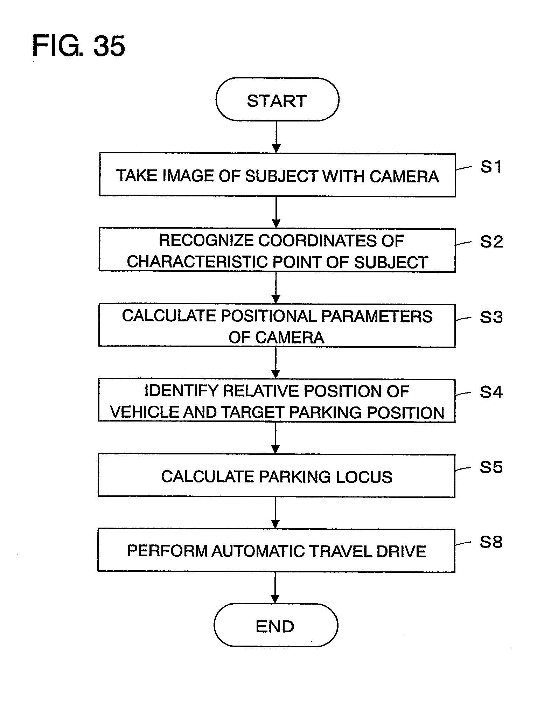

An operation of the eighteenth embodiment is shown in a flowchart in FIG. 35. After the parking locus L is calculated by the parking locus calculation means 5 in Step S5, the vehicle 7 is automatically traveled along the parking locus L by the automatic travel apparatus 17 in subsequent Step S8. As a result, it becomes possible for the driver to perform automatic parking into the parking space S merely by paying attention to an obstacle or the like on the periphery of the vehicle 7 without performing any drive operations for parking.

It should be noted here that also in the second to twelfth embodiments, it is possible to perform the automatic parking by similarly applying the eighteenth embodiment.

Nineteenth Embodiment

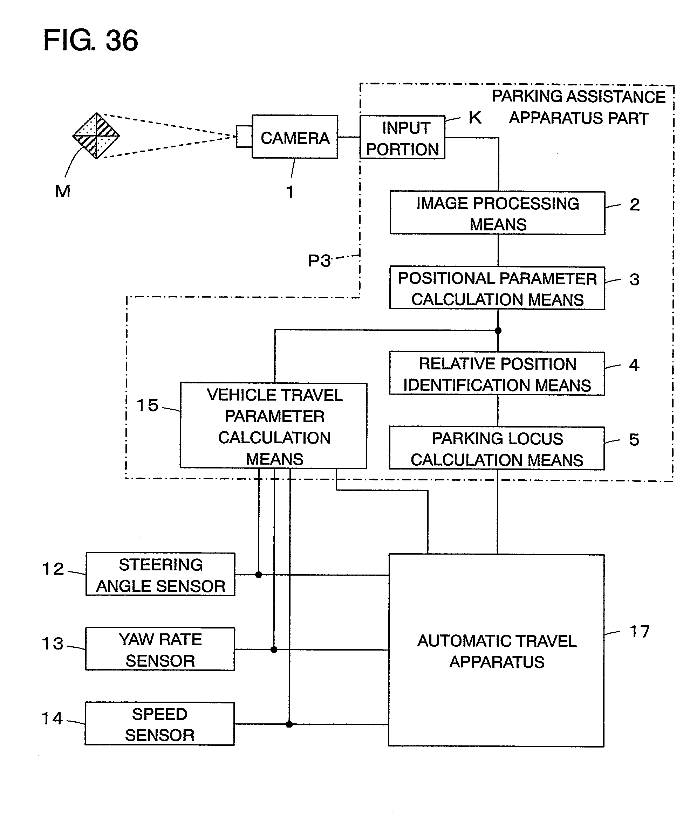

A construction of a parking assistance apparatus according to a nineteenth embodiment is shown in FIG. 36. In the nineteenth embodiment, in the apparatus in the fifteenth embodiment shown in FIG. 30, the automatic travel apparatus 17 is connected to the parking locus calculation means 5, the vehicle travel parameter calculation means 15, the steering angle sensor 12, the yaw rate sensor 13 and the speed sensor 14 instead of the guide apparatus 6.

The vehicle travel parameters such as the turn radius of the vehicle 7 with respect to a steering angle, the gain of the yaw rate sensor 13 and the moving distance per speed pulse are set in advance in the automatic travel apparatus 17. Based on the detection signals from the steering angle sensor 12, the yaw rate sensor 13, and the speed sensor 14 and the parking locus calculated by the parking locus calculation means 5, the automatic travel apparatus 17 creates a travel signal for causing the vehicle 7 to automatically travel along the parking locus.

Then, during automatic travel of the vehicle 7 into the parking space S by the automatic travel apparatus 17, the vehicle travel parameters are calculated by the vehicle travel parameter calculation means 15, are sent from the vehicle travel parameter calculation means 15 to the automatic travel apparatus 17, and are updated. As a result, it becomes possible to perform highly accurate automatic parking.

Other Embodiments

In each embodiment described above, when an obstacle sensor such as an ultrasonic sensor is mounted on the vehicle 7 and a warning is issued or an obstacle avoidance operation is performed in the case where the existence of a peripheral obstacle is recognized, a safer parking assist is provided.

It is also possible to use an object, such as a sprag or a pattern of a wall surface of a garage, which originally exists on the periphery of the parking space as the fixed target instead of installing the mark at a predetermined place having a predetermined positional relation with respect to the parking space. However, it is preferable that the existence of the object is easy to perceive and characteristic points internally included in the object be easy to recognize.

When a sensor that detects a vehicle height is provided to the vehicle 7, it becomes possible to compensate for a change of an installation height of the camera due to an increase/decrease of passengers, a fuel or a load, a secular change of a suspension, or the like.

In the fourth embodiment, it is also possible to provide a moving amount sensor that detects a moving distance and a moving direction for the vehicle 7 and correct, when there is an error between a predicted vehicle position and a recognized vehicle position by the mark M, the parameters (such as the turn radius with respect to a steering angle, the moving distance per speed pulse and the gain of the yaw rate sensor) of the vehicle 7 so that the error is eliminated. Also when there is a difference between left-side parking and right-side parking, it is preferable that a correction be made by distinguishing between the left and the right. After the correction, there hardly occurs an error of a calculated orbit, so an orbit, along which the vehicle actually travels, becomes a smooth orbit including no meander or the like, which makes it possible to perform safe and highly accurate parking. It is not required to make this correction at each time of a parking operation and it is sufficient that the correction is carried out at appropriate cycles. Also, the cycles may be determined in accordance with a distance between the mark and the vehicle 7. For instance, when the distance is long, the cycles for carrying out the correction are elongated, whereby a load of computation is reduced.

**Claims**

1.　A parking assistance apparatus comprising:

a camera mounted on a vehicle for taking an image of a fixed target that is fixed to a predetermined place having a predetermined positional relation with respect to a target parking position and has at least one characteristic point;

image processingmeans for extracting the characteristic point of the fixed target based on the image of the fixed target taken by the camera and recognizing two-dimensional coordinates of the characteristic point on the image of the fixed target;

positional parameter calculation means for calculating positional parameters of the camera including at least two-dimensional coordinates and a pan angle with reference to the fixed target based on two or more sets of the two-dimensional coordinates recognized by the image processing means;

relative position identification means for identifying a relative positional relation between the vehicle and the target parking position based on the positional parameters of the camera calculated by the positional parameter calculation means and the predetermined positional relation of the fixed target with respect to the target parking position; and

parking locus calculation means for calculating a parking locus for leading the vehicle to the target parking position based on the relative positional relation between the vehicle and the target parking position identified by the relative position identification means.

2.　A parking assistance apparatus according to claim 1, wherein in a state in which a distance between the vehicle and the target parking position is reduced through movement of the vehicle in accordance with the parking locus calculated by the parking locus calculation means, an image of the fixed target is taken by the camera, new two-dimensional coordinates of the characteristic point are recognized by the image processing means, new positional parameters of the camera are calculated by the positional parameter calculation means, a new relative positional relation between the vehicle and the target parking position is identified by the relative position identification means, and a new parking locus is calculated by the parking locus calculation means.

3. A parking assistance apparatus according to claim 1, wherein based on a relative positional relation of a parking completion position with respect to the target parking position at a time when the vehicle is actually parked in accordance with the parking locus calculated by the parking locus calculation means, the parking locus calculation means calculates a parking locus which is corrected to lead the vehicle to the target parking position, at a next time of the parking locus calculation.

4. A parking assistance apparatus according to claim 1, comprising a plurality of cameras including the camera mounted on the vehicle,
wherein an image of the fixed target is taken by each of the plurality of cameras.

5. A parking assistance apparatus according to claim 4, wherein at least part of fields of view of the plurality of cameras overlap each other.

6. A parking assistance apparatus according to claim 1, further comprising a guide apparatus for outputting drive operation guide information for a travel along the parking locus calculated by the parking locus calculation means to a driver of the vehicle.

7. A parking assistance apparatus according to claim 6, further comprising a sensor concerning vehicle travel, the guide apparatus including guide information creation means for creating the drive operation guide information based on a detection signal from the sensor concerning vehicle travel and the parking locus calculated by the parking locus calculation means, and guide information output means for outputting the guide information created by the guide information creation means.

8. A parking assistance apparatus according to claim 1, further comprising an automatic steering apparatus for automatically steering the vehicle for a travel along the parking locus calculated by the parking locus calculation means.

9. A parking assistance apparatus according to claim 8, further comprising a sensor concerning vehicle travel, the automatic steering apparatus creating a steering signal for automatically steering the vehicle based on a detection signal from the sensor concerning vehicle travel and the parking locus calculated by the parking locus calculation means.

10. A parking assistance apparatus according to claim 1, further comprising an automatic travel apparatus for causing the vehicle to automatically travel for a travel along the parking locus calculated by the parking locus calculation means.

11. A parking assistance apparatus according to claim 10, further comprising a sensor concerning vehicle travel, the automatic travel apparatus creating a travel signal for causing the vehicle to automatically travel based on a detection signal from the sensor concerning vehicle travel and the parking locus calculated by the parking locus calculation means.

12. A parking assistance apparatus according to claim 7, further comprising vehicle travel parameter calculation means for calculating a travel parameter of the vehicle based on at least two sets of the positional parameters calculated by the positional parameter calculation means from images of the fixed target taken by the camera at at least two locations midway through travel along the parking locus calculated by the parking locus calculation means and the detection signal obtained by the sensor concerning vehicle travel.

13. A parking assistance apparatus according to claim 1, wherein the fixed target has two or more characteristic points and the image processing means recognizes two or more sets of the two-dimensional coordinates of the characteristic points based on one image of the fixed target taken by the camera.

14. A parking assistance apparatus according to claim 13, wherein the fixed target includes a mark of a predetermined shape.

15. A parking assistance apparatus according to claim 1, further comprising a moving amount sensor for detecting a moving distance and a moving direction of the vehicle,
the fixed target having one or more characteristic points, the image processing means recognizing two or more sets of the two-dimensional coordinates of the characteristic points based on a plurality of images of the fixed target taken by the camera during movement of the vehicle and the moving distance and the moving direction of the vehicle detected by the moving amount sensor.

16. A parking assistance apparatus according to claim 7, wherein the sensor concerning vehicle travel includes a moving amount sensor for detecting a moving distance and a moving direction of the vehicle,

the fixed target having one or more characteristic points, the image processing means recognizing two or more sets of the two-dimensional coordinates of the characteristic points based on a plurality of images of the fixed target taken by the camera during movement of the vehicle and the moving distance and the moving direction of the vehicle detected by the moving amount sensor.

17. A parking assistance apparatus according to claim 1, wherein the fixed target includes a mark of a shape corresponding to information concerning the target parking position itself and/or information concerning a method of parking to the target parking position,

the image processing means obtaining information corresponding to the shape of the fixed target from the image of the fixed target.

18. A parking assistance apparatus according to claim 1, wherein the fixed target is displayed at the predetermined place using light.

19. A parking assistance apparatus according to claim 18, wherein the fixed target is displayed by optical projection or scanning.

20. A parking assistance apparatus according to claim 18, wherein the fixed target emits light by itself.

21. A parking assistance apparatus part comprising:

an input portion connected to a camera mounted on a vehicle for taking an image of a fixed target that is fixed to a predetermined place having a predetermined positional relation with respect to a target parking position and has at least one characteristic point;

image processingmeans for extracting the characteristic point of the fixed target based on the image of the fixed target taken by the camera and inputted through the input portion and recognizing two-dimensional coordinates of the characteristic point on the image of the fixed target;

positional parameter calculation means for calculating positional parameters of the camera including at least two-dimensional coordinates and a pan angle with reference to the fixed target based on two or more sets of the two-dimensional coordinates recognized by the image processing means;

relative position identification means for identifying a relative positional relation between the vehicle and the target parking position based on the positional parameters of the camera calculated by the positional parameter calculation means and the predetermined positional relation of the fixed target with respect to the target parking position; and

parking locus calculation means for calculating a parking locus for leading the vehicle to the target parking position based on the relative positional relation between the vehicle and the target parking position identified by the relative position identification means.

22. parking assist method comprising the steps of:

taking an image of a fixed target, which is fixed to a predetermined place having a predetermined positional relation with respect to a target parking position and has at least one characteristic point, with a camera mounted on a vehicle;

extracting the characteristic point of the fixed target based on the taken image of the fixed target and recognizing two-dimensional coordinates of the characteristic point on the image of the fixed target;

calculating positional parameters of the camera including at least two-dimensional coordinates and a pan angle with reference to the fixed target based on two or more sets of the recognized two-dimensional coordinates;

identifying a relative positional relation between the vehicle and the target parking position based on the calculated positional parameters of the camera and the predetermined positional relation of the fixed target with respect to the target parking position; and

calculating a parking locus for leading the vehicle to the target parking position based on the identified relative positional relation between the vehicle and the target parking position.

23. A parking assist program for causing a computer to execute the steps of:

taking an image of a fixed target, which is fixed to a predetermined place having a predetermined positional relation with respect to a target parking position and has at least one characteristic point, with a camera mounted on a vehicle;

extracting the characteristic point of the fixed target based on the taken image of the fixed target and recognizing two-dimensional coordinates of the characteristic point on the image of the fixed target;

calculating positional parameters of the camera including at least two-dimensional coordinates and a pan angle with reference to the fixed target based on two or more sets of the recognized two-dimensional coordinates;

identifying a relative positional relation between the vehicle and the target parking position based on the calculated positional parameters of the camera and the predetermined positional relation of the fixed target with respect to the target parking position; and

calculating a parking locus for leading the vehicle to the target parking position based on the identified relative positional relation between the vehicle and the target parking position.

**24.** A vehicle travel parameter calculation method comprising the steps of:

causing a vehicle to travel;

capturing a detection signal from a sensor concerning vehicle travel;

taking an image of a fixed target being outside the vehicle and having a characteristic point with a camera mounted on the vehicle at each of at least two locations midway through the travel;

extracting the characteristic point of the fixed target for each taken image of the fixed target and recognizing two-dimensional coordinates of the characteristic point on the image of the fixed target;

calculating each of positional parameters of the camera including two-dimensional coordinates and a pan angle with reference to the fixed target at the at least two locations based on the recognized two-dimensional coordinates; and

calculating a travel parameter of the vehicle based on at least two sets of the calculated positional parameters and the captured detection signal.

**25.** A vehicle travel parameter calculation method according to claim 24, wherein the detection signal is a signal concerning a steering angle, and a yaw rate and a moving distance of the vehicle, a turn radius of the vehicle with respect to the steering angle is calculated as the travel parameter.

**26.** A vehicle travel parameter calculation method according to claim 2 , wherein the detection signal is a signal concerning a yaw rate of the vehicle, and a gain of a yaw rate sensor is calculated as the travel parameter.

**27.** A vehicle travel parameter calculation method according to claim 24, wherein the detection signal is a signal concerning a moving distance of the vehicle, and a moving distance per speed pulse is calculated as the travel parameter.

**28.** A vehicle travel parameter calculation method according to claim 24, wherein a mark of a predetermined shape arranged on a road surface is used as the fixed target.

**29.** A vehicle travel parameter calculation method according to claim 24, wherein a lattice figure arranged on a road surface is used as the fixed target and a lattice intersection forms the characteristic point.

**30.** A parking assist method comprising the vehicle travel parameter calculation method according to claim 24.

**31.** A vehicle travel parameter calculation program for causing a computer to execute the steps of:

capturing a detection signal from a sensor concerning vehicle travel at a time of travel of a vehicle;

taking an image of a fixed target being outside the vehicle and having a characteristic point with a camera mounted on the vehicle at each of at least two locations midway through the travel;

extracting the characteristic point of the fixed target for each taken image of the fixed target and recognizing two-dimensional coordinates of the characteristic point on the image of the fixed target;

calculating each of positional parameters of the camera including two-dimensional coordinates and a pan angle with reference to the fixed target at the at least two locations based on the recognized two-dimensional coordinates; and

calculating a travel parameter of the vehicle based on at least two sets of the calculated positional parameters and the captured detection signal.

**32.** A parking assist program comprising the vehicle travel parameter calculation program according to claim 31.

**33.** A vehicle travel parameter calculation apparatus comprising:

a sensor for obtaining a detection signal concerning vehicle travel;

a camera mounted on a vehicle for taking an image of a fixed target being outside the vehicle and having a characteristic point;

image processingmeans for extracting the characteristic point of the fixed target for each image of the fixed target taken by the camera at at least two locations midway through travel of the vehicle and recognizing two-dimensional coordinates of the characteristic point on the image of the fixed target;

positional parameter calculation means for calculating each of positional parameters of the camera including two-dimensional coordinates and a pan angle with reference to the fixed target at the at least two locations based on the two-dimensional coordinates recognized by the image processing means; and

vehicle travel parameter calculation means for calculating a travel parameter of the vehicle based on at least two sets of the positional parameters calculated by the positional parameter calculation means and the detection signal obtained by the sensor.

**34.** A parking assistance apparatus comprising the vehicle travel parameter calculation apparatus according to claim 33.

**35.** A vehicle travel parameter calculation apparatus part comprising:

an input portion connected to a camera mounted on a vehicle for taking an image of a fixed target being outside the vehicle and having a characteristic point;

image processing means for extracting the characteristic point of the fixed target for each image of the fixed target taken by the camera at at least two locations midway through travel of the vehicle and inputted through the input portion and recognizing two-dimensional coordinates of the characteristic point on the image of the fixed target;

positional parameter calculation means for calculating each of positional parameters of the camera including two-dimensional coordinates and a pan angle with reference to the fixed target at the at least two locations based on the two-dimensional coordinates recognized by the image processing means; and

vehicle travel parameter calculation means, which is connected to a sensor that obtains a detection signal concerning vehicle travel, for calculating a travel parameter of the vehicle based on at least two sets of the positional parameters calculated by the positional parameter calculation means and the detection signal obtained by the sensor.

**36.** A parking assistance apparatus part comprising the vehicle travel parameter calculation apparatus part according to claim 35.

# FIG. 1

PARKING ASSISTANCE
APPARATUS PART

CAMERA

INPUT
PORTION — K

1

IMAGE PROCESSING
MEANS — 2

P1

POSITIONAL PARAMETER
CALCULATION MEANS — 3

RELATIVE POSITION
IDENTIFICATION MEANS — 4

PARKING LOCUS
CALCULATION MEANS — 5

GUIDE APPARATUS — 6

M

# FIG. 2

S

8

7

M

1

A

# FIG. 3

C1

M

C2

C4

C3

C5

## FIG. 4

```
            ┌─────────────┐
            │    START    │
            └──────┬──────┘
                   │
                   ▼
    ┌──────────────────────────────┐
    │ TAKE IMAGE OF SUBJECT WITH CAMERA │── S1
    └──────────────┬───────────────┘
                   │
                   ▼
    ┌──────────────────────────────┐
    │   RECOGNIZE COORDINATES OF    │── S2
    │ CHARACTERISTIC POINT OF SUBJECT│
    └──────────────┬───────────────┘
                   │
                   ▼
    ┌──────────────────────────────┐
    │ CALCULATE POSITIONAL PARAMETERS │── S3
    │         OF CAMERA             │
    └──────────────┬───────────────┘
                   │
                   ▼
    ┌──────────────────────────────┐
    │   IDENTIFY RELATIVE POSITION OF │── S4
    │ VEHICLE AND TARGET PARKING POSITION│
    └──────────────┬───────────────┘
                   │
                   ▼
    ┌──────────────────────────────┐
    │    CALCULATE PARKING LOCUS    │── S5
    └──────────────┬───────────────┘
                   │
                   ▼
    ┌──────────────────────────────┐
    │  OUTPUT DRIVE OPERATION GUIDE │── S6
    │        INFORMATION            │
    └──────────────┬───────────────┘
                   │
                   ▼
            ┌─────────────┐
            │     END     │
            └─────────────┘
```

## FIG. 5

FIG. 6

FIG. 7

FIG. 8

FIG. 9

FIG. 10

FIG. 11

FIG. 12

FIG. 13A

FIG. 13B

## FIG. 13C

## FIG. 14

## FIG. 15

FIG. 16

FIG. 17

FIG. 18

FIG. 19

M7　　　S

M6

FIG. 20

19　　　　　　　　18

| DISPLAY CONTROL APPARATUS | → | OPTICAL DISPLAY APPARATUS |

S

M

## FIG. 21

## FIG. 22

## FIG. 23

## FIG. 24

# FIG. 25

PARKING ASSISTANCE
K   APPARATUS PART

CAMERA — INPUT PORTION

M

1

P1

IMAGE PROCESSING MEANS — 2

POSITIONAL PARAMETER CALCULATION MEANS — 3

RELATIVE POSITION IDENTIFICATION MEANS — 4

PARKING LOCUS CALCULATION MEANS — 5

6 —

GUIDE APPARATUS

12 — STEERING ANGLE SENSOR

13 — YAW RATE SENSOR

14 — SPEED SENSOR

GUIDE INFORMATION CREATION MEANS — 10

GUIDE INFORMATION OUTPUT MEANS — 11

# FIG. 26

VEHICLE TRAVEL
PARAMETER
CALCULATION
APPARATUS PART

CAMERA

INPUT PORTION — K

M

1

P2

IMAGE PROCESSING MEANS — 2

POSITIONAL PARAMETER CALCULATION MEANS — 3

12 — STEERING ANGLE SENSOR

13 — YAW RATE SENSOR

14 — SPEED SENSOR

VEHICLE TRAVEL PARAMETER CALCULATION MEANS — 15

# FIG. 27

```
                    START

S11 ─┐   TAKE IMAGE OF MARK
         WITH CAMERA

S12 ─┐   RECOGNIZE COORDINATE
         OF CHARACTERISTIC
         POINT OF MARK

S13 ─┐   CALCULATE POSITIONAL
         PARAMETERS OF CAMERA

S14 ─┐   START TRAVEL                    S19 ─┐   END TRAVEL

S15      HAS VEHICLE TRAVELED    Y        S20 ─┐   TAKE IMAGE OF MARK
         BY PREDETERMINED                          WITH CAMERA
         DISTANCE?
                                          S21 ─┐   RECOGNIZE COORDINATE
              N                                     OF CHARACTERISTIC
                                                    POINT OF MARK
S16 ─┐   CAPTURE STEERING
         ANGLE SIGNAL                     S22 ─┐   CALCULATE POSITIONAL
                                                   PARAMETERS OF CAMERA
S17 ─┐   CAPTURE YAW RATE
         SIGNAL                           S23 ─┐   CALCULATE TURN RADIUS,
                                                   TURN ANGLE AND MOVING
S18 ─┐   CAPTURE SPEED PULSE                       DISTANCE FROM TWO
         SIGNAL                                    SETS OF POSITIONAL
                                                   PARAMETERS

                                          S24 ─┐   CALCULATE TURN RADIUS,
                                                   TURN ANGLE AND MOVING
                                                   DISTANCE FROM
                                                   CAPTURED DETECTION
                                                   SIGNALS

                                          S25 ─┐   CALCULATE TRAVEL
                                                   PARAMETERS

                                                    END
```

## FIG. 28

## FIG. 29

## FIG. 30

## FIG. 31

CAMERA
1

INPUT PORTION
K

PARKING ASSISTANCE APPARATUS PART

M

P1

IMAGE PROCESSING MEANS — 2

POSITIONAL PARAMETER CALCULATION MEANS — 3

RELATIVE POSITION IDENTIFICATION MEANS — 4

PARKING LOCUS CALCULATION MEANS — 5

AUTOMATIC STEERING APPARATUS — 16

# FIG. 32

```
                    ┌─────────────┐
                    │    START    │
                    └──────┬──────┘
                           │
                           ▼
    ┌──────────────────────────────────────────┐
    │  TAKE IMAGE OF SUBJECT WITH CAMERA        │── S1
    └──────────────────────┬───────────────────┘
                           │
                           ▼
    ┌──────────────────────────────────────────┐
    │      RECOGNIZE COORDINATES OF             │── S2
    │    CHARACTERISTIC POINT OF SUBJECT        │
    └──────────────────────┬───────────────────┘
                           │
                           ▼
    ┌──────────────────────────────────────────┐
    │   CALCULATE POSITIONAL PARAMETERS         │── S3
    │             OF CAMERA                     │
    └──────────────────────┬───────────────────┘
                           │
                           ▼
    ┌──────────────────────────────────────────┐
    │      IDENTIFY RELATIVE POSITION OF        │── S4
    │ VEHICLE AND TARGET PARKING POSITION       │
    └──────────────────────┬───────────────────┘
                           │
                           ▼
    ┌──────────────────────────────────────────┐
    │       CALCULATE PARKING LOCUS             │── S5
    └──────────────────────┬───────────────────┘
                           │
                           ▼
    ┌──────────────────────────────────────────┐
    │  PERFORM AUTOMATIC STEERING DRIVE         │── S7
    └──────────────────────┬───────────────────┘
                           │
                           ▼
                    ┌─────────────┐
                    │     END     │
                    └─────────────┘
```

# FIG. 33

PARKING ASSISTANCE APPARATUS PART

CAMERA

INPUT PORTION

K

M

1

P3

IMAGE PROCESSING MEANS — 2

POSITIONAL PARAMETER CALCULATION MEANS — 3

RELATIVE POSITION IDENTIFICATION MEANS — 4

VEHICLE TRAVEL PARAMETER CALCULATION MEANS

15

PARKING LOCUS CALCULATION MEANS — 5

12 — STEERING ANGLE SENSOR

13 — YAW RATE SENSOR

14 — SPEED SENSOR

AUTOMATIC STEERING APPARATUS — 16

# FIG. 34

# FIG. 35

```
        ( START )
            │
            ▼
┌────────────────────────────────┐
│ TAKE IMAGE OF SUBJECT WITH CAMERA│──  S1
└────────────────────────────────┘
            │
            ▼
┌────────────────────────────────┐
│     RECOGNIZE COORDINATES OF    │──  S2
│  CHARACTERISTIC POINT OF SUBJECT│
└────────────────────────────────┘
            │
            ▼
┌────────────────────────────────┐
│  CALCULATE POSITIONAL PARAMETERS│──  S3
│           OF CAMERA             │
└────────────────────────────────┘
            │
            ▼
┌────────────────────────────────┐
│   IDENTIFY RELATIVE POSITION OF │──  S4
│VEHICLE AND TARGET PARKING POSITION│
└────────────────────────────────┘
            │
            ▼
┌────────────────────────────────┐
│      CALCULATE PARKING LOCUS    │──  S5
└────────────────────────────────┘
            │
            ▼
┌────────────────────────────────┐
│   PERFORM AUTOMATIC TRAVEL DRIVE │──  S8
└────────────────────────────────┘
            │
            ▼
        (  END  )
```

# FIG. 36

## INTERNATIONAL SEARCH REPORT

| | International application No. |
|---|---|
| | PCT/JP2007/072358 |

A. CLASSIFICATION OF SUBJECT MATTER
*B60R21/00(2006.01)i, B60R1/00(2006.01)i, G06T1/00(2006.01)i, H04N7/18
(2006.01)i*

According to International Patent Classification (IPC) or to both national classification and IPC

B. FIELDS SEARCHED

Minimum documentation searched (classification system followed by classification symbols)
B60R21/00, B60R1/00, G06T1/00, H04N7/18

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-343212 A (Aisin Seiki Co., Ltd.), 14 December, 2001 (14.12.01), Claim 1; Figs. 6 to 9 (Family: none) | 1-36 |
| A | JP 2006-298227 A (Toyota Motor Corp.), 02 November, 2006 (02.11.06), Claim 1; Fig. 8 & WO 2006-115139 A1 | 1-36 |
| A | JP 2002-172988 A (Mitsubishi Motors Corp.), 18 June, 2002 (18.06.02), Claim 1 (Family: none) | 1-36 |

[X] Further documents are listed in the continuation of Box C.     [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
25 January, 2008 (25.01.08)

Date of mailing of the international search report
12 February, 2008 (12.02.08)

Name and mailing address of the ISA/
Japanese Patent Office

Authorized officer

Facsimile No.

Telephone No.

Form PCT/ISA/210 (second sheet) (April 2007)

| INTERNATIONAL SEARCH REPORT | | International application No.<br>PCT/JP2007/072358 |
|---|---|---|

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-151562 A  (Mazda Motor Corp.),<br>25 May, 1992 (25.05.92),<br>Claims<br>(Family: none) | 24-36 |

Form PCT/ISA/210 (continuation of second sheet) (April 2007)

**REFERENCES CITED IN THE DESCRIPTION**

**Patent documents cited in the description**

- JP 2002172988 A

- JP 4151562 A